# EUROPEAN PATENT SPECIFICATION

(11) **EP 4 486 812 B1**
(45) Date of publication and mention of the grant of the patent: **18.02.2026**
(21) Application number: 23707764.9
(22) Date of filing: 02.03.2023
(51) Int. Cl.: C08G 18/08, C08F 290/06, C08F 290/14, C08G 18/32, C08G 18/75, C08G 18/76, C08G 18/83, C09D 5/44

(54) **POLYESTER-POLYURETHANE-POLY(METH)ACRYLIC HYBRID DISPERSION**
POLYESTER-POLYURETHAN-POLY(METH)ACRYL-HYBRIDDISPERSION
DISPERSION HYBRIDE POLYESTER-POLYURÉTHANE-POLY(MÉTH)ACRYLIQUE

(30) Priority: 04.03.2022 EP 22160266
(43) Date of publication of application: 08.01.2025
(73) Proprietor: BASF Coatings GmbH, 48165 Münster (DE)
(72) Inventor: SCHOEPPING, Tobias, 48165 Münster (DE); RASPE, Nicola, 01728 Bannewitz (DE); ZIHANG, Thomas, 48165 Münster (DE)
(74) Representative: Coatings IP Association
(86) International application number: PCT/EP2023/055349
(87) International publication number: WO 2023/166133

(56) References cited:
- US-A1- 2015 315 414

## Description

The present invention relates to a polyester-polyurethane-poly(meth)acrylic hybrid dispersion and a method to produce a polyester-polyurethane-poly(meth)acrylic hybrid dispersion. Furthermore, the invention relates to a coating composition comprising a polyester-polyurethane-poly(meth)acrylic hybrid dispersion, a coating layer formed thereof and a thus coated substrate. Moreover, the invention relates to the use of a coating composition comprising a polyester-polyurethane-poly(meth)acrylic hybrid dispersion in automotive coating and a method of making a multilayer coating, wherein at least one coating layer is formed from a coating composition comprising a polyester-polyurethane-poly(meth)acrylic hybrid dispersion.

### BACKGROUND

The coating of automobile bodies is carried out in multilayer coatings. The multi-coat paint system includes inter alia a primer surfacer layer, which is formed on the usually precoated substrate, followed by one or more basecoat layers and a clearcoat layer on top. The individual layers can be baked separately or applied in a wet-on-wet process, wherein a coating layer is formed on the previous coating layer without an intermediate curing step. A flash-off or drying step is necessary between the two coating steps, wherein the solvents of the coating composition evaporate before applying the subsequent coating layer. Thus, it is essential that a quick drying is achieved during flash-off or drying step to prevent the mixing of the coating composition after applying the subsequent coating composition. A quick drying can be achieved, for example, by a high solids content of the coating composition.

Nowadays, it is common to use the integrated wet-on-wet-on-wet application for the coating of automobile bodies, wherein at least three coating layers are applied in a wet-on-wet-on-wet process. Two integrated paint processes (IPP) are particularly preferred, wherein the integrated paint process 1 (IPP1) comprises the formation of a primer surfacer layer by applying a primer surfacer composition on a preferably electrocoated metallic substrate followed flash-off or drying step. Subsequently, one or two basecoat compositions are applied on top of the primer surfacer layer to form one or two basecoat layers followed by a flash-off or drying step. Subsequently, a clearcoat composition is applied on top of the basecoat layer(s) to form a clearcoat layer, which can be followed by a flash-off or drying step. Finally, all layers are cured simultaneously in a single curing step.

In the integrated paint process 2 (IPP2) the preferably electrocoated metallic substrate is not coated with a primer surfacer layer but two basecoat compositions are applied in a wet-on-wet application to form two basecoat layers, followed by a flash-off or drying step, wherein the first basecoat has a primer surfacer function. Afterwards, a clearcoat composition is applied to form a clearcoat layer followed by a curing step to cure all coating layers at the same time. The simultaneous curing of all coating layers reduces the energy and material costs of the coating process.

There are high demands on the individual coating layers as well as on the multilayer coatings in terms of environmental issues, the compatibility of the individual coating layers, good appearance and weather resistance. A superior appearance requires a good compatibility of the different coating layers of the multilayer coating.

Furthermore, it should be possible to produce the multilayer coating system in a simple and inexpensive manner.

EP 1199342 A1 describes the use of binder combinations containing a water-miscible hydroxyurethane to increase the solids content of the respective binder combinations. Polyester-polyurethane-poly(meth)acrylic hybrid dispersions are known from US 10,233,353 B2. However, there is still a need to improve the basecoat compositions to achieve a good compatibility between the different coating layers. A good compatibility of the different coating compositions forming the coating layers in a multilayer coating results in a superior appearance of the multilayer coating.

It was the aim to provide a coating composition with a high solids content to provide coating compositions with good compatibility to other coating compositions within a multilayer coating and which can be used for integrated paint processes. Therefore, it was aimed to prepare a coating composition comprising a polyester-polyurethane-poly(meth)acrylic hybrid dispersion with a high solids content. A further aim was to provide a polyester-polyurethane-poly(meth)acrylic hybrid dispersion, wherein a final stripping process is not necessary thereby reducing time and costs for the preparation of such hybrid dispersion. Furthermore, the multilayer coating obtained from the coating composition should exhibit a superior appearance, particularly superior leveling.

### SUMMARY

The object has been solved by the subject-matter of the present application as well as by the preferred embodiments thereof disclosed in this specification.

A first subject-matter of the present invention is a polyester-polyurethane-poly(meth)acrylic hybrid dispersion obtainable
a. by esterifying
   at least one polyurethane containing carboxyl groups, the at least one polyurethane having an acid number of more than 200 mg KOH/g to 400 mg KOH/g and at least one or more terminal carboxyl groups; with at least one polyester containing hydroxyl groups, the polyester having a hydroxyl number of 50 mg KOH/g to 300 mg KOH/g,
   to obtain a polyester-polyurethane; followed by
b. polymerizing ethylenically unsaturated monomers at least comprising (meth)acrylic monomers by radical polymerization in the presence of the polyester-polyurethane of step (a) to obtain a poly(meth)acrylate, wherein one or more solvents are present and/or employed during step (a) and/or (b) and/or added after step (b).

The present invention further provides a method to produce the inventive polyester-polyurethane-poly(meth)acrylic hybrid dispersion
a. by esterifying
   at least one polyurethane containing carboxyl groups, the at least one polyurethane having an acid number of more than 200 mg KOH/g to 400 mg KOH/g and at least one or more terminal carboxyl groups; with at least one polyester containing hydroxyl groups, the polyester having a hydroxyl number of 50 mg KOH/g to 300 mg KOH/g,
   to obtain a polyester-polyurethane; followed by
b. polymerizing ethylenically unsaturated monomers at least comprising (meth)acrylic monomers by radical polymerization in the presence of the polyester-polyurethane of step (a) to obtain a poly(meth)acrylate, wherein one or more solvents are present and/or employed during step (a) and/or (b) and/or added after step (b).

Another object of the present invention is a coating composition comprising the inventive polyester-polyurethane-poly(meth)acrylic hybrid dispersion.

A further object of the present invention is a coating layer formed from a coating composition comprising the inventive polyester-polyurethane-poly(meth)acrylic hybrid dispersion and a thus coated substrate.

Another object of the present invention is the use of the coating composition comprising the inventive polyester-polyurethane-poly(meth)acrylic hybrid dispersion in automotive coating.

Yet another object of the present invention is a method of making a multilayer coating, comprising the steps of
a. applying one or more basecoat compositions to form one or more basecoat layers on a substrate, wherein at least one basecoat composition comprises the inventive polyester-polyurethane-poly(meth)acrylic hybrid dispersion,
b. applying a clearcoat composition on top of the one or more basecoat layers to form a clearcoat layer,
c. simultaneously curing of the one or more basecoat layers and clearcoat layer or individually curing one or more layers obtained in steps (a) and (b) before the subsequent coating layer is applied or individually curing all layers obtained in steps (a) and (b).

Preferred embodiments of the polyester-polyurethane-poly(meth)acrylic hybrid dispersion and the coating composition of the invention are apparent from the description hereinafter and also from the dependent claims.

### DETAILED DESCRIPTION

### Definitions

First of all, terms used in the context of the present invention will be explained.

The term "hybrid dispersion" according to the present invention describes a dispersion comprising a polyester-polyurethane and a poly(meth)acrylate. The polyester-polyurethane can be physically mixed with the poly(meth)acrylate and/or covalently bound to the poly(meth)acrylate.

The expression "aqueous coating composition" is known to the skilled person. It refers to a coating composition, wherein the volatile part of the coating composition is essentially based on water. "Aqueous" in the context of the present invention is therefore to be understood to mean that the coating composition comprises preferably a water fraction of at least 40 wt.-%, more preferably at least 50 wt.-%, most preferably at least 60 wt.-% based in each case on the total amount of the solvents present (that is, water and organic solvents).

The term "aliphatic" is used according to the IUPAC definition thereby including all acyclic or cyclic, saturated or unsaturated carbon compounds, excluding aromatic compounds.

The term "polymeric" describes substances, which are composed of multiple monomeric entities, which differ in terms of degree of polymerization, molar mass and chain length. The monomeric entities can be the same or different. "Polymeric" substances in the context of the present invention also include oligomeric substances.

Polyfunctional alcohols or isocyanates in the context of the present invention describe molecules with at least two functional groups and thus also include bifunctional alcohols or isocyanates.

The term "(meth)acrylic" describes substances, which comprise methacrylates and/or methacrylic acid and/or acrylates and/or acrylic acid.

### Polyester-polyurethane-poly(meth)acrylic hybrid dispersion

The polyester-polyurethane-poly(meth)acrylic hybrid dispersion obtainable
a. by esterifying
   at least one polyurethane containing carboxyl groups, the at least one polyurethane having an acid number of more than 200 mg KOH/g to 400 mg KOH/g and at least one or more terminal carboxyl groups; with at least one polyester containing hydroxyl groups, the polyester having a hydroxyl number of 50 mg KOH/g to 300 mg KOH/g,
   to obtain a polyester-polyurethane; followed by
b. polymerizing ethylenically unsaturated monomers at least comprising (meth)acrylic monomers by radical polymerization in the presence of the polyester-polyurethane of step (a) to obtain a poly(meth)acrylate, wherein one or more solvents are present and/or employed during step (a) and/or (b) and/or added after step (b).

The ethylenically unsaturated monomers in step (b) are polymerized to obtain a poly(meth)acrylate in the presence of the polyester-polyurethane obtained in step (a). Thus, the polyester-polyurethane of step (a) can be physically mixed with the poly(meth)acrylate of step (b) and/or covalently bound to the poly(meth)acrylate of step (b). The poly(meth)acrylate of step (b) can be covalently bound to the polyester-polyurethane of step (a) for example if the polyester-polyurethane of step (a) contains ethylenically unsaturated groups and/or if radical formation within the polyester-polyurethane of step (a) occurs by hydrogen abstraction resulting in the attachment of the ethylenically unsaturated (meth)acrylic monomers to the polyester-polyurethane. Thus, there is no better way to describe the inventive polyester-polyurethane-poly(meth)acrylic hybrid dispersion as by the process by which it is obtained.

The polyester-polyurethane-poly(meth)acrylic hybrid dispersion is obtainable by the following reaction steps (a) and (b).

### Step a

A polyester-polyurethane is obtained by esterifying at least one polyurethane containing carboxyl groups, the at least one polyurethane having an acid number of more than 200 mg KOH/g to 400 mg KOH/g and at least one or more terminal carboxyl groups with at least one polyester containing hydroxyl groups, the polyester having a hydroxyl number of 50 mg KOH/g to 300 mg KOH/g.

### i. Synthesis of a polyurethane

The at least one polyurethane is synthesized by reacting one or more diisocyanates with one or more diols and one or more carboxyl-group containing and/or carboxyl-group forming monomers.

The diols can be saturated or ethylenically unsaturated, more preferably saturated, wherein the saturated or ethylenically unsaturated diols can be substituted or unsubstituted. The diols can be aromatic or aliphatic, more preferably aliphatic. The aliphatic diols can be linear, branched or cyclic having preferably 2 to 40 carbon atoms, more preferably 2 to 20 carbon atoms, even more preferably 2 to 16 carbon atoms, most preferably 4 to 10 carbon atoms. Preferably at least one diol is substituted, more preferably the substituted diol comprises one or more carboxyl group(s).

Examples of suitable saturated monomeric diols are ethylene glycol, neopentyl glycol, tripropylene glycol, 1,2-propanediol, 1,3-propanediol, 1,4-butanediol, 1,3-butanediol, 1,2-butanediol, 1,5-pentanediol, 2,2,4-trimethyl-1,3-pentanediol, 1,6-hexanediol, 1,4-cyclohexanedimethanol, 1,2-cyclohexanedimethanol, 2,2-bis(4-hydroxy-cyclohexyl)-propane, dimethylol propionic acid and dimethylol butyric acid. The saturated monomeric diol is preferably ethylene glycol and/or dimethylol propionic acid.

Ethylenically unsaturated diols comprise preferably at least one allyl group, vinyl group, acryl group or methacryl group. Examples of ethylenically unsaturated monomeric diols are trimethylolpropane monoallyl ether and pentaerythritol-diallylether.

Preferably the one or more diols are ethylene glycol and/or dimethylol propionic acid.

The at least one diol is reacted with one or more diisocyanates to synthesize a polyurethane. The one or more diisocyanates can be aromatic or aliphatic, more preferably aliphatic. The aliphatic diisocyanate can be linear or cyclic, more preferably cyclic.

Suitable examples of cycloaliphatic diisocyanates are isophorone diisocyanate (= 5-isocyanato-1-isocyanatomethyl-1,3,3-trimethylcyclohexane), 5-isocyanato-1-(2-isocyanatoeth-1-yl)-1,3,3-trimethylcyclohexane, 5-isocyanato-1-(3-isocyanatoprop-1-yl)-1,3,3-trimethylcyclohexane, 5-isocyanato-(4-isocyanatobut-1-yl)-1,3,3-trimethylcyclohexane, 1-isocyanato-2-(3-isocyanatoprop-1-yl)cyclohexane, 1-isocyanato-2-(2-isocyanatoeth-1-yl)cyclohexane, 1-isocyanato-2-(4-isocyanatobut-1-yl)cyclohexane, 1,2-diisocyanatocyclobutane, 1,3-diisocyanatocyclobutane, 1,2-diisocyanatocyclopentane, 1,3-diisocyanatocyclopentane, 1,2-diisocyanatocyclohexane, 1,3-diisocyanatocyclohexane, 1,4-diisocyanatocyclohexane, dicyclohexylmethane 2,4'-diisocyanate and 4,4'-methylene bis(cyclohexyl isocyanate).

Suitable examples of aromatic diisocyanates are 2,4-toluene diisocyanate, 2,6-toluene diisocyanate, diphenylmethane-4,4'-diisocyanate, p-phenylene diisocyanate, biphenyl diisocyanate, 3,3'-dimethyl-4,4'-diphenylene diisocyanate and tetramethyl xylene diisocyanate.

Examples of linear aliphatic diisocyanates are ethylene diisocyanate, trimethylene diisocyanate, tetramethylene diisocyanate, pentamethylene diisocyanate, hexamethylene diisocyanate, 2,2,4-trimethylhexane-1,6-diisocyanate, heptamethylene diisocyanate and 1,12-dodecane diisocyanate.

The one or more diisocyanates are preferably isophorone diisocyanate, 4,4'-methylene bis(cyclohexyl isocyanate) and/or tetramethyl xylene diisocyanate.

The one or more diisocyanates are preferably reacted with the one or more diols in a solvent. The solvent is preferably an organic solvent. Suitable examples of organic solvents for the present invention include heterocyclic, aliphatic or aromatic hydrocarbons, mono- or polyfunctional alcohols, ethers, esters, ketones and amides such as N-methylpyrrolidone, N-ethylpyrrolidone, dimethylformamide, toluene, xylene, butanol, ethyl glycol and butyl glycol and their acetates, butyl diglycol, diethylene glycol dimethyl ether, cyclohexanone, methyl ethyl ketone (MEK), methyl isobutyl ketone (MIBK), acetone, isophorone, or mixtures thereof. Preferably the organic solvent is methyl ethyl ketone (MEK).

The thus obtained hydroxy-terminated polyurethane can be synthesized in a one-step or two-step process. In a one-step process, the one or more diisocyanates are reacted with the one or more diols, wherein the diols are used in excess to prepare a hydroxy-terminated polyurethane. In a two-step process, the one or more diisocyanates are first reacted with one or more diols. Subsequently, one or more diols are added to react terminal NCO groups to prepare a hydroxy-terminated polyurethane. In the two-step process, the one or more diol reacting with free isocyanates groups is preferably ethylene glycol.

The one or more diisocyanates are reacted with the one or more diols until preferably less than 2 wt.-%, most preferably less than 1 wt.-% of the NCO-groups based on the weight of the polyurethane are converted. Thereby, the polyurethane is substantially free of free NCO-groups, wherein the content of isocyanate (NCO content) is determined by adding an excess of 2 % N,N-dibutylamine solution in xylene to a homogeneous solution of the specimen in acetone / N-ethylpyrrolidone (1:1 Vol.-%) by potentiometric back titration of the amine excess with 0.1 N hydrochloric acid following DIN EN ISO 3251, DIN EN ISO 11909 and DIN EN ISO 14886.

The thus obtained hydroxy-terminated polyurethane is reacted with one or more carboxyl-group containing monomers and/or monomers containing carboxyl-group forming groups. Such monomers are preferably polycarboxylic acids and their anhydrides, preferably dicarboxylic acids, tricarboxylic acids and/or their anhydrides. The term "carboxyl-group forming group" refers to the ability of a functional group to form carboxyl groups preferably by hydrolysis of corresponding anhydride groups or ester groups.

The polycarboxylic acids and their anhydrides can be aromatic or aliphatic having preferably 2 to 20 carbons atoms, more preferably 2 to 16 carbon atoms, even more preferably 4 to 12 carbon atoms, most preferably 6 to 10 carbon atoms.

Examples of suitable aliphatic dicarboxylic acids are ethanedioic acid (oxalic acid), propanedioic acid (malonic acid), butanedioic acid (succinic acid), pentanedioic acid (glutaric acid), hexanedioic acid (adipic acid), heptanedioic acid (pimelic acid), octanedioic acid (suberic acid), nonanedioic acid (azelaic acid), decanedioic acid (sebacic acid), maleic acid, hexahydrophthalic acid and the respective anhydrides. Examples of suitable aromatic dicarboxylic acids are 1,2-benzenedicarboxylic acid (phthalic acid), 1,3-benzenedicarboxylic acid (isophthalic acid) and 1,4-benzenedicarboxylic acid (terephthalic acid) and the respective anhydrides.

Suitable tricarboxylic acids are citric acid, isocitric acid, aconitic acid, propane-1,2,3-tricarboxylic acid, agaric acid, trimesic acid, trimellitic acid and the respective anhydrides.

Preferably the hydroxy-terminated polyurethane is reacted with trimellitic anhydride.

The reaction is stopped at constant acid values. The obtained polyurethane has at least one terminal carboxyl group, preferably the polyurethane has one or more terminal carboxyl groups and one or more carboxyl groups in the backbone, more preferably the polyurethane has at least two carboxyl groups per terminal, most preferably the polyurethane has at least two carboxyl-groups per terminal and comprises one or more carboxyl groups in the backbone.

The obtained polyurethane can be linear or branched, preferably linear.

The obtained polyurethane has an acid number of more than 200 mg KOH/g to 400 mg KOH/g, preferably more than 205 mg KOH/g to 350 mg KOH/g, more preferably more than 210 mg KOH/g to 300 mg KOH/g, even more preferably more than 220 mg KOH/g to 300 mg KOH/g, most preferably 240 mg KOH/g to 300 mg KOH/g, which is determined in accordance to DIN EN ISO 2114.

Preferably the obtained polyurethane has a hydroxyl number in the range of 0 mg KOH/g to 50 mg KOH/g, more preferably 0 mg KOH/g to 46 mg KOH/g, even more preferably 0 mg KOH/g to 42 mg KOH/g, most preferably 0 mg KOH/g to 40 mg KOH/g, which is determined following R.-P. Krüger, R. Gnauck and R. Algeier (Plaste und Kautschuk, 20, 274 (1982)) using acetic anhydride in the presence of 4-dimethylaminopyridine as a catalyst in a tetrahydrofuran (THF) / dimethylformamide (DMF) solution at room temperature.

Subsequently, the obtained polyurethane is diluted with a solvent, preferably an organic solvent to a solids content of preferably 60 wt.-% to 80 wt.-%, more preferably to 65 wt.-% to 75 wt.-%, which is determined in accordance with DIN EN ISO 3251 at 130 °C for 60 min with 1.0 g weighed portion.

### ii. Synthesis of a polyester

The at least one polyester is synthesized by reacting one or more polyols with one or more monomers selected from the group consisting of dicarboxylic acids and cyclic acid anhydrides. The at least one polyester can be saturated or ethylenically unsaturated.

The polyols can be saturated or ethylenically unsaturated, more preferably saturated, wherein the saturated or ethylenically unsaturated polyols can be substituted or unsubstituted. The polyols can be aromatic or aliphatic, more preferably aliphatic. The aliphatic polyols can be linear, branched or cyclic having preferably 2 to 40 carbon atoms, more preferably 2 to 20 carbon atoms, even more preferably 2 to 16 carbon atoms, most preferably 4 to 10 carbon atoms.

Examples of suitable saturated monomeric polyols are ethylene glycol, neopentyl glycol, tripropylene glycol, 1,2-propanediol, 1,4-butanediol, 1,3-butanediol, 1,5-pentanediol, 2,2,4-trimethyl-1,3-pentanediol, 1,6-hexanediol, 1,4-cyclohexanedimethanol, 1,2-cyclohexanedimethanol, 2,2-bis(4-hydroxy-cyclohexyl)-propane, trimethylolpropane, trimethylolethane, trimethylolhexane, glycerol, 1,2,4-butantriol, ditrimethylolpropane, pentaerythritol and dipentaerythritol.

Ethylenically unsaturated polyols comprise preferably at least one allyl group, vinyl group, acryl group or methacryl group. Examples of ethylenically unsaturated monomeric polyols are trimethylolpropane monoallyl ether and pentaerythritol-diallylether.

Preferably the one or more polyols are neopentyl glycol, tripropylene glycol, 1,6-hexanediol and/or trimethylolpropane.

The at least one polyol is reacted with one or more monomers selected from the group consisting of dicarboxylic acids, tricarboxylic acids and cyclic acid anhydrides to synthesize a polyester.

The dicarboxylic acid can be aromatic or aliphatic having preferably 2 to 50 carbons atoms, more preferably 2 to 44 carbon atoms, even more preferably 4 to 44 carbon atoms, most preferably 6 to 44 carbon atoms.

Examples of suitable aliphatic dicarboxylic acids are ethanedioic acid (oxalic acid), propanedioic acid (malonic acid), butanedioic acid (succinic acid), pentanedioic acid (glutaric acid), hexanedioic acid (adipic acid), heptanedioic acid (pimelic acid), octanedioic acid (suberic acid), nonanedioic acid (azelaic acid), decanedioic acid (sebacic acid), maleic acid and hexahydrophthalic acid. Preferably hexanedioic acid (adipic acid) is used as an aliphatic dicarboxylic acid.

Examples of suitable aromatic dicarboxylic acids are 1,2-benzenedicarboxylic acid (phthalic acid), 1,3-benzenedicarboxylic acid (isophthalic acid) and 1,4-benzenedicarboxylic acid (terephthalic acid).

A further possibility is to use dimer fatty acids as polycarboxylic acid. Dimer fatty acids are mixtures, which are produced by oligomerization of unsaturated fatty acids. Unsaturated C₁₂ to C₂₂ fatty acids are used as starting material. Suitable dimer fatty acids are for example Radiacid 0970, Radiacid 0971, Radiacid 0972, Radiacid 0975, Radiacid 0976, Radiacid 0977, Pripol 1006, Pripol 1009, Pripol 1012 and Pripol 1013, Empol 1008, Empol 1061 and Empol 1062 (WO 2015/028201 A1).

Preferably the dicarboxylic acid is aromatic, more preferably isophthalic acid.

Suitable tricarboxylic acids are citric acid, isocitric acid, aconitic acid, propane-1,2,3-tricarboxylic acid, agaric acid, trimesic acid and trimellitic acid.

The cyclic acid anhydride has preferably 2 to 40 carbons atoms, more preferably 2 to 30 carbon atoms, even more preferably 4 to 20 carbon atoms, most preferably 6 to 18 carbon atoms. The cyclic acid anhydride can be saturated or ethylenically unsaturated.

Examples of suitable cyclic acid anhydrides are phthalic anhydride, trimellitic anhydride, maleic anhydride and its derivates and alkenyl succinic anhydride such as tetrapropenyl succinic anhydride. Preferably the one or more cyclic acid anhydrides are phthalic anhydride, trimellitic anhydride and/or tetrapropenyl succinic anhydride.

The one or more polyols are reacted with the one or more monomers selected from the group consisting of dicarboxylic acids and cyclic acid anhydrides at a temperature of preferably 200 °C to 250 °C, more preferably 210 °C to 240 °C.

The hydroxyl number of the obtained polyester is 50 mg KOH/g to 300 mg KOH/g, preferably 60 to 280 mg KOH/g, more preferably 70 to 250 mg KOH/g, even more preferably 100 to 250 mg KOH/g, most preferably 120 to 250 mg KOH/g, which is determined following R.-P. Krüger, R. Gnauck and R. Algeier (Plaste und Kautschuk, 20, 274 (1982)) using acetic anhydride in the presence of 4-dimethylaminopyridine as a catalyst in a tetrahydrofuran (THF) / dimethylformamide (DMF) solution at room temperature.

Preferably, the acid number of the obtained polyester is less than 20 mg KOH/g, more preferably less than 18 mg KOH/g, even more preferably less than 15 mg KOH/g, most preferably less than 12 mg KOH/g, which is determined in accordance to **DIN EN** ISO 2114.

The obtained polyester can be linear or branched, preferably branched.

### iii. Synthesis of the polyester-polyurethane (PEU) or polyester-polyurethane dispersion (PEUD)

The polyester and the polyurethane are mixed and the temperature is carefully raised to preferably 120 °C to 180 °C, more preferably 130 °C to 170 °C, while applying reduced pressure. Preferably the pressure is 15 mbar to 80 mbar, more preferably 15 mbar to 70 mbar. The process can be monitored by titration and viscosity measurement at 140 °C. The reaction is stopped when reaching an acid number of preferably 10 mg KOH/g to 50 mg KOH/g, more preferably 15 mg KOH/g to 45 mg KOH/g, most preferably 20 mg KOH/g to 40 mg KOH/g and/or a viscosity of preferably 1000 mPa*s to 2400 mPa*s, more preferably 1200 mPa*s to 2200 mPa*s, most preferably 1300 mPa*s to 2000 mPa*s determined by using a CAP2000H viscosimeter with spindle 03 at a temperature of 140 °C using a shear rate of 1250 s⁻¹ according to DIN EN ISO 2884-1. The temperature is reduced to a temperature of preferably 60 °C to 120 °C, more preferably 70 °C to 115 °C.

The polyester-polyurethane can be either neutralized with a neutralizing agent before the addition of the one or more solvents or reacted with at least one ethylenically unsaturated monomers as outlined in step b without the addition of one or more solvents.

Suitable examples of neutralizing agents are alkyl alkanolamines such as dimethyl ethanol amine (DMEA), diethyl ethanol amine (DEEA), methyl diethanol amine (MDEA) or methyl ethanol amine (NMEA). Preferably dimethyl ethanol amine is used as a neutralizing agent.

The one or more solvents are present and/or employed during step (a) and/or (b) and/or added after step (b), wherein the solvent can be present during the preparation of the polyester and/or polyurethane and/or during the esterification of the polyester and polyurethane during step (a) and/or during step (b), wherein the solvent can be present before, during and/or after the addition of the (meth)acrylic monomers and/or radical starter. The at least one polyurethane and at least one polyester in step (a) can be esterified in the presence of one or more solvents to obtain a polyester-polyurethane dispersion.

The solvent can be water or an organic solvent. Preferably, water is added to adjust the solids content and to produce an aqueous polyester-polyurethane dispersion.

Preferably the synthesized polyester-polyurethane dispersion has a solids content of ≥ 40 wt.-%, more preferably ≥ 42 wt.-%, even more preferably ≥ 45 wt.-%, most preferably ≥ 48 wt.-%, which is determined in accordance with DIN EN ISO 3251 at 130 °C for 60 min with 1.0 g weighed portion.

Preferably the polyester-polyurethane dispersion exhibits a viscosity of 100 mPa*s to 300 mPa*s, more preferably of 110 mPa*s to 290 mPa*s, even more preferably of 120 mPa*s to 280 mPa*s, most preferably of 130 mPa*s to 260 mPa*s as determined using a Rheolab QC rotational rheometer with a cylinder cc27 at a temperature of 23 °C using a shear rate of 1000 s⁻¹ according to DIN 53019-1.

Preferably the polyester-polyurethane has an acid number in the range of 10 mg KOH/g to 50 mg KOH/g, more preferably 15 mg KOH/g to 45 mg KOH/g, even more preferably 20 mg KOH/g to 40 mg KOH/g, most preferably 25 mg KOH/g to 35 mg KOH/g, which is determined in accordance to DIN EN ISO 2114.

Preferably the polyester-polyurethane has a particle size of 50 nm to 200 nm, more preferably 70 nm to 180 nm, even more preferably 80 nm to 150 nm, most preferably 90 nm to 130 nm, which is determined by measuring the hydrodynamic volume/hydrodynamic radius of the dispersion particles using photon correlation spectroscopy (PCS).

Preferably the polyester-polyurethane has a number average molecular weight (Mₙ) of 1,000 g/mol to 3,500 g/mol, more preferably 1,200 g/mol to 3,200 g/mol, even more preferably 1,500 g/mol to 3,000 g/mol, most preferably 1,800 g/mol to 2,800 g/mol, which is determined by gel permeation chromatography using a poly(meth)acrylate standard and a tetrahydrofuran/acetic acid mixture (1 mol acetic acid per 1 liter tetrahydrofuran).

Preferably the polyester-polyurethane has a weight average molecular weight (M_{w}) of 6,000 g/mol to 50,000 g/mol, more preferably 7,000 g/mol to 48,000 g/mol, even more preferably 8,000 g/mol to 46,000 g/mol, most preferably 9,000 g/mol to 43,000 g/mol, which is determined by gel permeation chromatography using a poly(meth)acrylate standard and a tetrahydrofuran/acetic acid mixture (1 mol acetic acid per 1 liter tetrahydrofuran).

### Step b

In the presence of the polyester-polyurethane of step (a), ethylenically unsaturated monomers at least comprising (meth)acrylic monomers are polymerized by radical polymerization to obtain a poly(meth)acrylate.

The ethylenically unsaturated monomers in step (b) are added to the polyester-polyurethane dispersion or undiluted polyester-polyurethane of step (a) prior to the addition of the radical initiator, simultaneously with and/or after the radical initiator. If the ethylenically unsaturated monomers are added to the polyester-polyurethane of step (a) prior to the addition of the radical initiator, the ethylenically unsaturated monomers and the polyester-polyurethane of step (a) are preferably incubated for at least 10 min, more preferably for at least 30 min, even more preferably for at least 60 min, most preferably for at least 2 hours such as for example at least 4 hours at a temperature of preferably 20 °C to 30 °C.

A solvent can be added to the polyester-polyurethane prior or after the addition of the (meth)acrylic monomers or radical initiators to obtain a polyester-polyurethane dispersion comprising (meth)acrylic monomers. The solvent can be water or an organic solvent. Preferably, water is added to adjust the solids content and to produce an aqueous polyester-polyurethane dispersion.

The ethylenically unsaturated monomers can be cyclic, linear or branched alkyl (meth)acrylates, hydroxyalkyl esters of (meth)acrylic acid, (meth)acrylic acid and/or vinylaromatic hydrocarbons, wherein the ethylenically unsaturated monomer can be monoethylenically unsaturated or poly-ethylenically unsaturated, wherein the functionality of the poly-ethylenically unsaturated monomer can be in the range of two to five. Preferably the poly-ethylenically unsaturated monomer is di-ethylenically unsaturated or tri-ethylenically unsaturated, most preferably di-ethylenically unsaturated. Preferably the ethylenically unsaturated monomers are monoethylenically unsaturated monomers or mixtures of monoethylenically unsaturated monomers and di-ethylenically unsaturated monomers.

Suitable cyclic, linear or branched alkyl (meth)acrylates are cyclohexyl (meth)acrylates and alkyl (meth)acrylates having up to 20 carbon atoms. Preferred monoethylenically unsaturated alkyl (meth)acrylates are t-butyl acrylate, n-butyl acrylate, n-butyl methacrylate, methyl methacrylate, ethylhexyl(meth)acrylate, cyclohexyl(meth)acrylate, most preferably t-butyl acrylate, n-butyl acrylate, n-butyl methacrylate and ethylhexyl methacrylate.

Suitable hydroxyalkyl esters of (meth)acrylic acid are hydroxyalkyl esters of (meth)acrylic acid in which the hydroxyalkyl group contains up to 6 carbon atoms, preferably 2-hydroxyethyl (meth)acrylate, 2-hydroxypropyl (meth)acrylate, 3-hydroxypropyl (meth)acrylate, 3-hydroxybutyl (meth)acrylate and 4-hydroxybutyl (meth)acrylate.

Suitable di-ethylenically unsaturated monomers are ethylene glycol di(meth)acrylate, diethylene glycol di(meth)acrylate, 1,2-propanediol di(meth)acrylate, 1,3-propanediol di(meth)acrylate, 1,3-butanediol di(meth)acrylate, 1,4-butanediol di(meth)acrylate, 1,5-pentanediol di(meth)acrylate, 1,6-hexanediol di(meth)acrylate, 1,10-decandiol di(meth)acrylate, tricyclodecanedimethanol di(meth)acrylate, allyl (meth)acrylate and divinylbenzene. Suitable poly-ethylenically unsaturated monomers are trimethylolpropane tri(meth)acrylate, pentaerythritol tri - and tetraacrylate, tris(2-hydroxyethyl)isocyanurate triacrylate and ethoxylated 3 trimethylolpropane triacrylate.

Suitable vinylaromatic hydrocarbons are styrene, α-alkylstyrenes, vinyltoluene, (meth)acrylamide and (meth)acrylonitrile.

Preferably the ethylenically unsaturated monomers in step (b) are alkyl (meth)acrylates, more preferably t-butyl acrylate, n-butyl acrylate, n-butyl methacrylate and ethylhexyl methacrylate.

The ethylenically unsaturated monomers in step (b) are added to the polyester-polyurethane of step (a) prior to the addition of the radical initiator or simultaneously with the radical initiator.

To initiate radical polymerization water-soluble or water insoluble initiators can be used. Examples of water-soluble initiators are hydrogen peroxide, peroxydisulfates such as sodium, potassium and ammonium peroxydisulfate, ammonium salts of 4,4'-azobis(4-cyanopentanoic acid), 2,2'-azobis(2-methyl-N-1,1-bis(hydroxymethyl)ethyl)propionamide, 2,2'-azobis(2-methyl-N-2-hydroxyethyl)propionamide). Preferably ammonium peroxydisulfate (APS) is used as a water-soluble initiator.

Examples of water-insoluble initiators are tert. butyl-peroxy-2-ethylhexanol, tertiary butyl peroxy pivalate and dibenzoyl peroxide. Preferably tert. butyl-peroxy-2-ethylhexanol is used as a water-insoluble initiator.

Preferably the radical polymerization is initiated by a water-insoluble initiator, more preferably by tert. butyl-peroxy-2-ethylhexanol.

The radical starter produces a radical within the ethylenically unsaturated polyester-polyurethane polymer and/or within the ethylenically unsaturated monomers. Thereby, a poly(meth)acrylate is obtained, which can be physically mixed with the polyester-polyurethane of step (a) or covalently bound to the polyester-polyurethane of step (a). For example, the poly(meth)acrylate can be covalently bound to the polyester-polyurethane of step (a) by forming a graft polymer formed by radical copolymerization of the ethylenically unsaturated monomers and an ethylenically unsaturated group in the backbone of the polyester-polyurethane of step (a) and/or by H abstraction on the backbone of the polyester-polyurethane of step (a).

Preferably the solids content of the obtained polyester-polyurethane-poly(meth)acrylic hybrid dispersion is ≥ 40 wt.-%, more preferably ≥ 42 wt.-%, even more preferably ≥ 43 wt.-%, even more preferably ≥ 44 wt.-%, even more preferably ≥ 48 wt.-%, most preferably ≥ 50 wt.-%, which is determined in accordance with DIN EN ISO 3251 at 130 °C for 60 min with 1.0 g weighed portion.

Preferably the polyester-polyurethane-poly(meth)acrylic hybrid has a glass transition temperature of -50 °C to +50 °C, more preferably -48 °C to 40 °C, even more preferably -45 °C to 35 °C, most preferably -45 °C to 30 °C, which is measured in accordance with DIN-EN-ISO 11357-1 and -2.

Preferably the polyester-polyurethane-poly(meth)acrylic hybrid, which has been prepared using one or more monoethylenically unsaturated monomers, has a number average molecular weight (Mₙ) of 2,500 g/mol to 5,000 g/mol, more preferably 2,700 g/mol to 4,800 g/mol, most preferably 3,000 g/mol to 4,500 g/mol, which is determined by gel permeation chromatography using a poly(meth)acrylate standard and a tetrahydrofuran/acetic acid mixture (1 mol acetic acid per 1 liter tetrahydrofuran).

Preferably the polyester-polyurethane-poly(meth)acrylic hybrid, which has been prepared using one or more monoethylenically unsaturated monomers, has a weight average molecular weight (M_{w}) of 25,000 g/mol to 550,000 g/mol, more preferably 30,000 g/mol to 500,000 g/mol, even more preferably 50,000 g/mol to 450,000 g/mol, most preferably 100,000 g/mol to 400,000 g/mol, which is determined by gel permeation chromatography using a poly(meth)acrylate standard and a tetrahydrofuran/acetic acid mixture (1 mol acetic acid per 1 liter tetrahydrofuran).

The number average molecular weight (Mₙ) and the weight average molecular weight (M_{w}) of the polyester-polyurethane-poly(meth)acrylic hybrid, which has been prepared using at least one poly-ethylenically unsaturated monomer, preferably at least one di-ethylenically unsaturated monomer, can be even higher than the number average molecular weight (Mₙ) and the weight average molecular weight (M_{w}) as described in the two paragraphs hereinbefore.

Preferably the polyester-polyurethane-poly(meth)acrylic hybrid has an acid number of 5 mg KOH/g to 50 mg KOH/g, more preferably 10 mg KOH/g to 45 mg KOH/g, even more preferably 15 mg KOH/g to 40 mg KOH/g, even more preferably 15 mg KOH/g to 35 mg KOH/g, most preferably 15 mg KOH/g to 30 mg KOH/g, which is determined in accordance to **DIN EN** ISO 2114.

Preferably the polyester-polyurethane-poly(meth)acrylic hybrid dispersion has a viscosity of 5 mPa*s to 3,000 mPa*s, more preferably of 10 mPa*s to 2,500 mPa*s, even more preferably 10 mPa*s to 1000 mPa*s, even more preferably 10 mPa*s to 500 mPa*s, most preferably 10 mPa*s to 200 mPa*s determined using a Rheolab QC rotational rheometer at a temperature of 23 °C using a shear rate of 1000 s⁻¹ according to DIN 53019-1.

Preferably the polyester-polyurethane-poly(meth)acrylic hybrid dispersion has a particle size of 50 nm to 400 nm, more preferably of 70 nm to 300 nm, even more preferably of 100 nm to 250 nm, most preferably of 120 nm to 220 nm, which is determined by measuring the hydrodynamic volume/hydrodynamic radius of the dispersion particles using photon correlation spectroscopy (PCS).

Preferably the polyester-polyurethane-poly(meth)acrylic hybrid dispersion comprises 45 to 90 wt.-% of polyester-polyurethane of step (a) and 10 to 55 wt.-% of poly(meth)acrylate obtainable by step (b), more preferably 50 to 90 wt.-% of polyester-polyurethane of step (a) and 10 to 50 wt.-% of poly(meth)acrylate obtainable by step (b), even more preferably 55 to 90 wt.-% of polyester-polyurethane of step (a) and 10 to 45 wt.-% of poly(meth)acrylate obtainable by step (b), even more preferably 60 to 90 wt.-% of polyester-polyurethane of step (a) and 10 to 40 wt.-% of poly(meth)acrylate obtainable by step (b), most preferably 65 to 90 wt.-% of polyester-polyurethane of step (a) and 10 to 35 wt.-% of poly(meth)acrylate obtainable by step (b), based on the solids content of the polyester-polyurethane-poly(meth)acrylic hybrid dispersion.

### Method for producing a polyester-polyurethane-poly(meth)acrylic hybrid dispersion

The polyester-polyurethane-poly(meth)acrylic hybrid dispersion according to the present invention is produced by esterifying in a first step (a) at least one polyurethane containing carboxyl groups, the at least one polyurethane having an acid number of more than 200 mg KOH/g to 400 mg KOH/g and at least one or more terminal carboxyl groups, with at least one polyester containing hydroxyl groups, the polyester having a hydroxyl number of 50 mg KOH/g to 300 mg KOH/g, to obtain a polyester-polyurethane; followed by the second step (b), wherein ethylenically unsaturated monomers at least comprising (meth)acrylic monomers are polymerized by radical polymerization in the presence of the polyester-polyurethane of step (a) to obtain a poly(meth)acrylate, wherein one or more solvents are present and/or employed during step (a) and/or (b) and/or added after step (b).

### Step (a): Preparation of a polyester-polyurethane (PEU) or polyester-polyurethane dispersion (PEUD)

The polyester-polyurethane of the polyester-polyurethane-poly(meth)acrylic dispersion is produced by esterifying at least one polyurethane containing carboxyl groups, wherein at least one polyurethane has an acid number of more than 200 mg KOH/g to 400 mg KOH/g and at least one or more terminal carboxyl groups, with at least one polyester containing hydroxyl groups, wherein the polyester has a hydroxyl number of 50 mg KOH/g to 300 mg KOH/g.

A polyurethane is synthesized by reacting one or more diisocyanates with one or more diols and one or more carboxyl-group containing and/or carboxyl-group forming monomers. The diols, the diisocyanates and the carboxyl-group containing and/or carboxyl-group forming monomers are the same as the diols, diisocyanates and carboxyl-group containing and/or carboxyl-group forming monomers as described above in item i. synthesis of the polyurethane.

The one or more diisocyanates are reacted with the one or more diols until preferably less than 2 wt.-%, most preferably less than 1 wt.-% of the NCO-groups based on the weight of the polyurethane are converted. Thereby, the polyurethane is substantially free of free NCO-groups.

The thus obtained hydroxy-terminated polyurethane is reacted with one or more carboxyl-group containing and/or monomers containing a carboxyl-group forming group. Such monomers are preferably polycarboxylic acids and their anhydrides, preferably dicarboxylic acids, tricarboxylic acids and/or their anhydrides. Suitable dicarboxylic acids, tricarboxylic acids and their anhydrides have been indicated above.

Preferably the hydroxy-terminated polyurethane is reacted with trimellitic anhydride.

The reaction is stopped at constant acid values. The obtained polyurethane has at least one terminal carboxyl group, preferably the polyurethane has one or more terminal carboxyl groups and one or more carboxyl groups in the backbone, more preferably the polyurethane has at least two carboxyl groups per terminal, most preferably the polyurethane has at least two carboxyl-groups per terminal and comprises one or more carboxyl groups in the backbone.

The obtained polyurethane can be linear or branched, preferably linear.

The obtained polyurethane has an acid number of more than 200 mg KOH/g to 400 mg KOH/g, preferably more than 205 mg KOH/g to 350 mg KOH/g, more preferably more than 210 mg KOH/g to 300 mg KOH/g, even more preferably more than 220 mg KOH/g to 300 mg KOH/g, most preferably 240 mg KOH/g to 300 mg KOH/g, which is determined in accordance to DIN EN ISO 2114.

Subsequently, the obtained polyurethane is diluted with a solvent, preferably an organic solvent to a solids content of preferably 60 wt.-% to 80 wt.-%, more preferably to 65 wt.-% to 75 wt.-%, which is determined in accordance with DIN EN ISO 3251 at 130 °C for 60 min with 1.0 g weighed portion.

The at least one polyester is synthesized by reacting one or more polyols with one or more monomers selected from the group consisting of dicarboxylic acids and cyclic acid anhydrides. The polyols and the one or more monomers selected from the group consisting of dicarboxylic acids and cyclic acid anhydrides are the same as the polyols and monomers selected from the group consisting of dicarboxylic acids and anhydrides as described above in item ii. synthesis of the polyester.

The one or more polyols are reacted with the one or more monomers selected from the group consisting of dicarboxylic acids and cyclic acid anhydrides at a temperature of preferably 200 °C to 250 °C, more preferably 210 °C to 240 °C.

The obtained polyester can be linear or branched, preferably branched.

The hydroxyl number of the obtained polyester is 50 mg KOH/g to 300 mg KOH/g, preferably 60 to 280 mg KOH/g, more preferably 70 to 250 mg KOH/g, even more preferably 100 to 250 mg KOH/g, most preferably 120 to 250 mg KOH/g, which is determined following R.-P. Krüger, R. Gnauck and R. Algeier (Plaste und Kautschuk, 20, 274 (1982)) using acetic anhydride in the presence of 4-dimethylaminopyridine as a catalyst in a tetrahydrofuran (THF) / dimethylformamide (DMF) solution at room temperature.

The acid number of the obtained polyester is less than 20 mg KOH/g, preferably less than 18 mg KOH/g, more preferably less than 15 mg KOH/g, most preferably less than 12 mg KOH/g, which is determined in accordance to DIN EN ISO 2114.

The polyester and the polyurethane are mixed and the temperature is carefully raised to preferably 120 °C to 180 °C, more preferably 130 °C to 170 °C, while applying reduced pressure. Preferably the pressure is 15 mbar to 80 mbar, more preferably 15 mbar to 70 mbar. The process is monitored by titration and viscosity measurement at 140 °C. Preferably the reaction is stopped when reaching an acid number of preferably 10 to 50 mg KOH/g, more preferably 15 to 45 mg KOH/g, most preferably 20 mg KOH/g to 40 mg KOH/g and/or a viscosity of preferably 1000 mPa*s to 2400 mPa*s, more preferably 1200 mPa*s to 2200 mPa*s, most preferably 1300 mPa*s to 2000 mPa*s determined by using a CAP2000H viscosimeter with spindle 03 at a temperature of 140 °C using a shear rate of 1250 s⁻¹ according to DIN EN ISO 2884-1.

The temperature is reduced to a temperature of preferably 60 °C to 120 °C, more preferably 70 °C to 115 °C.

The polyester-polyurethane can be either neutralized with a neutralizing agent before the addition of the one or more solvents or reacted with at least one ethylenically unsaturated monomers as outlined in step (b) without the addition of one or more solvents.

Suitable examples of neutralizing agents are alkyl alkanolamines such as dimethyl ethanol amine (DMEA), diethyl ethanol amine (DEEA), methyl diethanol amine (MDEA) or methyl ethanol amine (NMEA). Preferably dimethyl ethanol amine is used as a neutralizing agent.

The one or more solvents are present and/or employed during step (a) and/or (b) and/or added after step (b), wherein the solvent can be present during the preparation of the polyester and/or polyurethane and/or during the esterification of the polyester and polyurethane during step (a) and/or during step (b), wherein the solvent can be present before, during and/or after the addition of the (meth)acrylic monomers and/or radical starter. The at least one polyurethane and at least one polyester in step (a) can be esterified in the presence of one or more solvents to obtain a polyester-polyurethane dispersion.

Preferably, a solvent is added to adjust the solids content of the polyester-polyurethane dispersion. The solvent can be water or an organic solvent. Preferably water is added to adjust the solids content and to produce an aqueous polyester-polyurethane dispersion.

Preferably the synthesized polyester-polyurethane dispersion has a solids content of ≥ 40 wt.-%, more preferably ≥ 42 wt.-%, most preferably ≥ 45 wt.-%, which is determined in accordance with DIN EN ISO 3251 at 130 °C for 60 min with 1.0 g weighed portion.

Preferably the polyester-polyurethane dispersion exhibits a viscosity of 100 mPa*s to 300 mPa*s, more preferably of 110 mPa*s to 290 mPa*s, even more preferably of 120 mPa*s to 280 mPa*s, most preferably of 130 mPa*s to 260 mPa*s as determined using a Rheolab QC rotational rheometer with a cylinder cc27 at a temperature of 23 °C using a shear rate of 1000 s⁻¹ according to DIN 53019-1.

Preferably the polyester-polyurethane has an acid number in the range of 10 mg KOH/g to 50 mg KOH/g, more preferably 15 mg KOH/g to 45 mg KOH/g, even more preferably 20 mg KOH/g to 40 mg KOH/g, most preferably 25 mg KOH/g to 35 mg KOH/g, which is determined in accordance to DIN EN ISO 2114.

Preferably the polyester-polyurethane has a particle size of 50 nm to 200 nm, more preferably 70 nm to 180 nm, even more preferably 80 nm to 150 nm, most preferably 90 nm to 130 nm, which is determined by measuring the hydrodynamic volume/hydrodynamic radius of the dispersion particles using photon correlation spectroscopy (PCS).

Preferably the polyester-polyurethane has a number average molecular weight (Mₙ) of 1,000 g/mol to 3,500 g/mol, more preferably 1,200 g/mol to 3,200 g/mol, even more preferably 1,500 g/mol to 3,000 g/mol, most preferably 1,800 g/mol to 2,800 g/mol, which is determined by gel permeation chromatography using a poly(meth)acrylate standard and a tetrahydrofuran/acetic acid mixture (1 mol acetic acid per 1 liter tetrahydrofuran).

Preferably the polyester-polyurethane has a weight average molecular weight (M_{w}) of 6,000 g/mol to 50,000 g/mol, more preferably 7,000 g/mol to 48,000 g/mol, even more preferably 8,000 g/mol to 46,000 g/mol, most preferably 9,000 g/mol to 43,000 g/mol, which is determined by gel permeation chromatography using a poly(meth)acrylate standard and a tetrahydrofuran/acetic acid mixture (1 mol acetic acid per 1 liter tetrahydrofuran).

### Step (b): Preparation of a poly(meth)acrylate

In the presence of the polyester-polyurethane of step (a), ethylenically unsaturated monomers at least comprising (meth)acrylic monomers are polymerized by radical polymerization to obtain a poly(meth)acrylate.

The ethylenically unsaturated monomers can be added to a neutralized and/or diluted polyester-polyurethane dispersion or an undiluted polyester-polyurethane. The ethylenically unsaturated monomers in step (b) are added to the polyester-polyurethane of step (a) prior to the addition of the radical initiator or simultaneously with the radical initiator. If the ethylenically unsaturated monomers are added to the polyester-polyurethane of step (a) prior to the addition of the radical initiator, the ethylenically unsaturated monomers and the polyester-polyurethane of step (a) are preferably incubated for at least 10 min, more preferably for at least 30 min, even more preferably for at least 60 min, most preferably for at least 2 hours such as for example at least 4 hours at a temperature of preferably 20 °C to 30 °C.

A solvent can be added to the polyester-polyurethane prior or after the addition of the (meth)acrylic monomers or radical initiators to obtain a polyester-polyurethane dispersion comprising (meth)acrylic monomers. The solvent can be water or an organic solvent. Preferably, water is added to adjust the solids content and to produce an aqueous polyester-polyurethane dispersion.

Suitable ethylenically unsaturated monomers are indicated above. Preferably monoethylenically unsaturated alkyl (meth)acrylate monomers are polymerized in step (b), more preferably t-butyl acrylate, n-butyl acrylate, n-butyl methacrylate and ethylhexyl methacrylate.

To initiate radical polymerization water-soluble or water insoluble initiators can be used. Examples of water-soluble initiators are hydrogen peroxide, peroxydisulfates such as sodium, potassium and ammonium peroxydisulfate, ammonium salts of 4,4'-azobis(4-cyanopentanoic acid), 2,2'-azobis(2-methyl-N-1,1-bis(hydroxymethyl)ethyl)propionam ide, 2,2'-azobis(2-methyl-N-(2-hydroxyethyl)propionamide). Preferably ammonium peroxydisulfate (APS) is used as a water-soluble initiator.

Examples of water-insoluble initiators are tert. butyl-peroxy-2-ethylhexanol, tertiary butyl peroxy pivalate and dibenzoyl peroxide. Preferably tert. butyl-peroxy-2-ethylhexanol is used as a water-insoluble initiator.

Preferably the radical polymerization is initiated by a water-insoluble initiator, more preferably by tert. butyl-peroxy-2-ethylhexanol.

The radical starter produces a radical within the ethylenically unsaturated polyester-polyurethane polymer and/or within the ethylenically unsaturated monomers.

Thereby, a poly(meth)acrylate is obtained, which can be physically mixed with the polyester-polyurethane of step (a) or covalently bound to the polyester-polyurethane of step (a). For example, the poly(meth)acrylate can be covalently bound to the polyester-polyurethane of step (a) by forming a graft polymer formed by radical copolymerization of the ethylenically unsaturated monomers and an ethylenically unsaturated group in the backbone of the polyester-polyurethane of step (a) and/or by H abstraction on the backbone of the polyester-polyurethane of step (a).

Preferably the solids content of the obtained polyester-polyurethane-poly(meth)acrylic hybrid dispersion is ≥ 40 wt.-%, more preferably ≥ 42 wt.-%, even more preferably ≥ 43 wt.-%, even more preferably ≥ 44 wt.-%, even more preferably ≥ 48 wt.-%, most preferably ≥ 50 wt.-%, which is determined in accordance with DIN EN ISO 3251 at 130 °C for 60 min with 1.0 g weighed portion.

Preferably the polyester-polyurethane-poly(meth)acrylic hybrid has a glass transition temperature of -50 °C to +50 °C, more preferably -48 °C to 40°C, even more preferably -45 °C to 35°C, most preferably -45 °C to 30 °C, which is measured in accordance with DIN-EN-ISO 11357-1 and -2.

Preferably the polyester-polyurethane-poly(meth)acrylic hybrid, which has been prepared using one or more monoethylenically unsaturated monomers, has a number average molecular weight (Mₙ) of 2,500 g/mol to 5,000 g/mol, more preferably 2,700 g/mol to 4,800 g/mol, most preferably 3,000 g/mol to 4,500 g/mol, which is determined by gel permeation chromatography using a poly(meth)acrylate standard and a tetrahydrofuran/acetic acid mixture (1 mol acetic acid per 1 liter tetrahydrofuran).

Preferably the polyester-polyurethane-poly(meth)acrylic hybrid, which has been prepared using one or more monoethylenically unsaturated monomers, has a weight average molecular weight (M_{w}) of 25,000 g/mol to 550,000 g/mol, more preferably 30,000 g/mol to 500,000 g/mol, even more preferably 50,000 g/mol to 450,000 g/mol, most preferably 100,000 g/mol to 400,000 g/mol, which is determined by gel permeation chromatography using a poly(meth)acrylate standard and a tetrahydrofuran/acetic acid mixture (1 mol acetic acid per 1 liter tetrahydrofuran).

The number average molecular weight (Mₙ) and the weight average molecular weight (M_{w}) of the polyester-polyurethane-poly(meth)acrylic hybrid, which has been prepared using at least one poly-ethylenically unsaturated monomer, preferably at least one di-ethylenically unsaturated monomer, can be even higher than the number average molecular weight (Mₙ) and the weight average molecular weight (M_{w}) as described in the two paragraphs hereinbefore.

Preferably the polyester-polyurethane-poly(meth)acrylic hybrid has an acid number of 5 mg KOH/g to 50 mg KOH/g, more preferably 10 mg KOH/g to 45 mg KOH/g, even more preferably 15 mg KOH/g to 40 mg KOH/g, even more preferably 15 mg KOH/g to 35 mg KOH/g, most preferably 15 mg KOH/g to 30 mg KOH/g, which is determined in accordance to DIN EN ISO 2114.

Preferably the polyester-polyurethane-poly(meth)acrylic hybrid dispersion has a viscosity of 5 mPa*s to 3,000 mPa*s, more preferably of 10 mPa*s to 2,500 mPa*s, even more preferably 10 mPa*s to 1000 mPa*s, even more preferably 10 mPa*s to 500 mPa*s, even more preferably 10 mPa*s to 200 mPa*s as determined by using a Rheolab QC rotational rheometer with a cylinder cc27 at a temperature of 23 °C using a shear rate of 1000 s⁻¹ according to DIN 53019-1.

Preferably the polyester-polyurethane-poly(meth)acrylic hybrid dispersion has a particle size of 50 nm to 400 nm, more preferably of 70 nm to 300 nm, even more preferably of 100 nm to 250 nm, most preferably of 120 nm to 220 nm, which is determined by measuring the hydrodynamic volume/hydrodynamic radius of the dispersion particles using photon correlation spectroscopy (PCS).

Preferably the polyester-polyurethane-poly(meth)acrylic hybrid dispersion comprises 45 to 90 wt.-% of polyester-polyurethane of step (a) and 10 to 55 wt.-% of poly(meth)acrylate of step (b), more preferably 50 to 90 wt.-% of polyester-polyurethane of step (a) and 10 to 50 wt.-% of poly(meth)acrylate of step (b), even more preferably 55 to 90 wt.-% of polyester-polyurethane of step (a) and 10 to 45 wt.-% of poly(meth)acrylate of step (b), even more preferably 60 to 90 wt.-% of polyester-polyurethane of step (a) and 10 to 40 wt.-% of poly(meth)acrylate of step (b), most preferably 65 to 90 wt.-% of polyester-polyurethane of step (a) and 10 to 35 wt.-% of poly(meth)acrylate of step (b), based on the solids content of the polyester-polyurethane-poly(meth)acrylic hybrid dispersion.

### Use of the polyester-polyurethane-poly(meth)acrylic hybrid dispersion according to the invention

The polyester-polyurethane-poly(meth)acrylic hybrid dispersion according to the invention is suitable for multiple applications. The polyester-polyurethane-poly(meth)acrylic hybrid dispersion according to the invention can inter alia be used in many areas of coating, particularly in automotive coating.

Particularly, the polyester-polyurethane-poly(meth)acrylic hybrid dispersion according to the invention can be used in a basecoat composition or a filler coating composition, more preferably in a basecoat composition or a filler coating composition in automotive coating. The coating composition comprising the polyester-polyurethane-poly(meth)acrylic hybrid dispersion according to the invention can be used to form a basecoat layer on an untreated or a pretreated substrate. Furthermore, the coating composition comprising the polyester-polyurethane-poly(meth)acrylic hybrid dispersion according to the invention can be used to form a second basecoat layer on top of a first basecoat layer.

### Coating composition comprising the inventive polyester-polyurethane-poly(meth)acrylic hybrid dispersion

Another object of the present invention is a coating composition comprising a polyester-polyurethane-poly(meth)acrylic hybrid dispersion according to the invention. The polyester-polyurethane-poly(meth)acrylic hybrid dispersion according to the invention can be used as a binder in any coating composition, particularly in basecoat compositions.

The polyester-polyurethane-poly(meth)acrylic hybrid dispersion according to the invention can be used in any liquid coating composition, which can be aqueous or solvent based, preferably in an aqueous coating composition.

The coating composition comprising the polyester-polyurethane-poly(meth)acrylic hybrid dispersion according to the invention can be used to form one or more layers in a multilayer coating, preferably in a multilayer coating on an untreated or a pretreated substrate, particularly on automotive bodies or parts thereof.

The coating composition is preferably thermally curable. The thermally curable coating composition comprises besides the polyester-polyurethane-poly(meth)acrylic hybrid dispersion according to the invention further ingredients such as one or more further binders (A1) and/or one or more commonly used coating additives (A2) and/or one or more pigments and/or fillers (A3) and/or one or more solvents (A4) as additional components (A).

### Further binders (A1)

Besides the polyester-polyurethane-poly(meth)acrylic hybrid dispersion according to the invention, further polymers selected from group consisting of polyurethanes, polyureas, polyesters, polyamides, poly(meth)acrylates and/or copolymers of the structural units of said polymers can be used as a binder. The term "poly(meth)acrylate" refers to not only polyacrylates but also polymethacrylates, and also polymers which comprise both methacrylates and/or methacrylic acid and/or acrylates and/or acrylic acid.

Preferred polyurethanes are described, for example, in German patent application DE 199 48 004 A1, page 4, line 19 to page 11, line 29 (polyurethane prepolymer B1), in European patent application EP 0 228 003 A1, page 3, line 24 to page 5, Line 40, European Patent Application EP 0 634 431 A1, page 3, line 38 to page 8, line 9, and international patent application WO 92/15405, page 2, line 35 to page 10, line 32.

Preferred polyesters are described, for example, in DE 4009858 A1 in column 6, line 53 to column 7, line 61 and column 10, line 24 to column 13, line 3 and Example D; or in WO 2014/033135 A2, page 2, line 24 to page 7, line 10 and page 28, line 13 to page 29, line 13. Likewise, polyesters may have a dendritic structure, as described, for example, in WO 2008/148555 A1.

Preferred polyurethane-poly(meth)acrylate copolymers (e.g., (meth)acrylated polyurethanes) and their preparation are described, for example, in WO 91/15528 A1, page 3, line 21 to page 20, line 33 and in DE 4437535 A1, page 2, line 27 to page 6, line 22.

Preferred poly(meth) acrylates are those which can be prepared by multistage free-radical emulsion polymerization of olefinically unsaturated monomers in water and/or organic solvents. For example, seed-core-shell polymers (SCS polymers) are particularly preferred. Such polymers or aqueous dispersions containing such polymers are known, for example, from WO 2016/116299 A1.

Preferred polyurethane-polyurea copolymers are polyurethane-polyurea particles, preferably those having an average particle size of 40 to 2000 nm, the polyurethane-polyurea particles, each in reacted form, containing at least one isocyanate group-containing polyurethane prepolymer containing anionic and/or groups which can be converted into anionic groups and at least one polyamine containing two primary amino groups and one or two secondary amino groups. Preferably, such copolymers are used in the form of an aqueous dispersion. Such polymers can in principle be prepared by conventional polyaddition of, for example, polyisocyanates with polyols and polyamines.

At least one further binder is contained in the coating composition comprising the polyester-polyurethane-poly(meth)acrylic hybrid dispersion according to the invention to crosslink the inventive polyester-polyurethane-poly(meth)acrylic hybrid dispersion. Suitable crosslinking binders are amino resins such as urea-formaldehyde resins or melamine-formaldehyde resins or isocyanate-terminated polyurethanes with free or blocked isocyanate-groups or isocyanates, which can be free or blocked isocyanates. Blocked isocyanates refer to reaction products of an isocyanate in which the isocyanate functionality has been reacted with a "blocking agent". The blocking of the isocyanate occurs through a reaction of the isocyanate with a compound containing an active hydrogen. Suitable blocking agents are derivatives from oximes, lactams, phenols, active methylenes, pyrazoles, mercaptans, imidazoles, amines, imines, triazoles, hydroxyl amines, and aliphatic or cycloaliphatic alkyl monoalcohols. The blocked isocyanate component will not react at room temperature. The crosslinking reaction of blocked isocyanates with hydroxy-functional compounds will be achieved using elevated temperatures.

Additives are binders, which are typically used in minimal amounts and to provide special properties to a coating composition.

### Coating additives (A2)

The coating composition may comprise at least one additive selected from the group consisting of reactive diluents, light stabilizers, antioxidants, defoamers, emulsifiers, surfactants, slip additives, polymerization inhibitors, initiators for free-radical polymerizations, catalysts, adhesion promoters, film-forming auxiliaries, wetting agents, dispersants, levelling agents, rheology control agents, sag-control agents (SCA), flame retardants, corrosion inhibitors, siccatives, biocides, matting agents as well as dyes, which are colorants, which are soluble in the coating composition. Further examples of suitable coatings additives are e.g., described in the textbook "Lackadditive" ("Additives for Coatings" by Johan Bieleman, Wiley-VCH, Weinheim, 1998). The additives can be used in the known and customary amounts.

Preferred coating additives are rheology control agents, wetting agents or leveling agents.

### Pigments and Fillers (A3)

The coating composition according to the present invention may contain pigments, particularly if the coating composition is a basecoat composition or a filler composition. The terms "coloring pigment" and "color pigment" are interchangeable and include colored, black and white pigments. As a color pigment inorganic and organic pigments can be used.

Examples of white pigments are titanium dioxide, zinc white, zinc sulfide and lithopone.

Examples of black pigments are carbon black, iron manganese black and spinel black. Examples of pigments with other colors are chromium oxide, chromium oxide hydrate green, cobalt green, ultramarine green, cobalt blue, ultramarine blue, manganese blue, ultramarine violet, cobalt and manganese violet, iron oxide red, cadmium sulfoselenide, molybdate red and ultramarine red, iron oxide brown, mixed brown, spinel and corundum phases and chromium orange, iron oxide yellow, nickel titanium yellow, chrome titanium yellow, cadmium sulfide, cadmium zinc sulfide, chrome yellow and bismuth vanadate.

Possible organic pigments are azo pigments, polycyclic pigments and anthraquinone pigments.

The term "filler" is known to the person skilled in the art, for example from DIN 55943 (date: October 2001). Examples of suitable fillers are kaolin, dolomite, calcite, chalk, calcium sulfate, barium sulfate, talc, silica, in particular pyrogenic silica, hydroxides such as aluminum hydroxide or magnesium hydroxide; in addition, reference is made to Römpp Lexikon Lacke und Druckfarben, Georg Thieme Verlag, 1998, pages 250 ff., "Fillers".

### Solvents (A4)

In particular the coating composition may also comprise solvents. Solvents can be water or an organic solvent. Preferably, water is used as a solvent. Suitable examples of organic solvents include heterocyclic, aliphatic or aromatic hydrocarbons, mono- or polyfunctional alcohols, ethers, esters, ketones and amides such as N-methylpyrrolidone, N-ethylpyrrolidone, dimethylformamide, toluene, xylene, butanol, ethyl glycol and butyl glycol and their acetates, butyl diglycol, diethylene glycol dimethyl ether, cyclohexanone, methyl ethyl ketone (MEK), methyl isobutyl ketone (MIBK), acetone, isophorone, or mixtures thereof. The organic solvents can be used in combination and also in combination with water in aqueous coating compositions.

The content of the polyester-polyurethane-poly(meth)acrylic hybrid dispersion according to the invention with respect to the total coating composition is preferably 2 wt.-% to 30 wt.-%, more preferably 5 wt.-% to 25 wt.-%, most preferably 7 wt.-% to 20 wt.-%.

### Coating layer formed from a coating composition comprising the polyester-polyurethane-poly(meth)acrylic hybrid dispersion according to the invention and a thus coated substrate

The coating composition to form a coating layer is applied to a substrate by customary painting methods familiar to a person of ordinary skill in the art. Substrate materials are chosen from the group consisting of metals, polymers, wood, glass, mineral-based materials and composites of any of the aforementioned materials. It is possible to use untreated or pretreated substrate, where the pretreatment regularly depends on the chemical nature of the substrate.

The coating composition comprising the polyester-polyurethane-poly(meth)acrylate hybrid dispersion according to the invention is preferably applied by spraying, pneumatically and/or electrostatically. The coating composition is thermally curable at elevated temperatures, preferably at temperatures between 60 °C to 180 °C, depending on the reactivity of the crosslinking agent and the duration, most preferably between 80 °C to 160 °C.

The invention further provides a substrate coated with a coating layer formed from a coating composition comprising the polyester-polyurethane-poly(meth)acrylic hybrid dispersion according to the invention.

### Multilayer coating and multilayer-coated substrates

Another object of the present invention is a method of making a multilayer coating, comprising the steps of
a) applying one or more basecoat compositions to form one or more basecoat layers on a substrate, wherein at least one basecoat composition comprises the inventive polyester-polyurethane-poly(meth)acrylic hybrid dispersion,
b) applying a clearcoat composition on top of the one or more basecoat layers to form a clearcoat layer,
c) simultaneously curing of the one or more basecoat layers and clearcoat layer or individually curing one or more layers obtained in steps (a) and (b) before the subsequent coating layer is applied or individually curing all layers obtained in steps (a) and (b).

The multilayer-coated substrate can be a pretreated or untreated substrate, which can be uncoated or precoated. The individual coating layers are applied by the customary painting methods familiar to a person of ordinary skill in the art. The coating composition is preferably applied by spraying, pneumatically and/or electrostatically, wherein at least one coating composition comprises the polyester-polyurethane-poly(meth)acrylic hybrid dispersion according to the invention, which may be a basecoat composition or a filler coating composition.

The application of the basecoat composition on the substrate to form a basecoat layer and the application of the clearcoat composition on top of the basecoat layer(s) is preferably carried out by a wet-on-wet application, i.e., an application where the preceding layer is not cured or not fully cured before next coating composition is applied. Thus, prior to the application of the clearcoat composition, the basecoat composition may be flashed off at room temperature (25 °C) and/or alternatively, it may be dried at elevated temperatures.

The coating composition is thermally curable at elevated temperatures, preferably at temperatures between 60 °C to 180 °C, depending on the reactivity of the crosslinking agent and the duration, most preferably between 80 °C to 160 °C. The coating composition is preferably cured for 15 min to 50 min, most preferably 20 min to 40 min.

Additionally, provided by the invention is a substrate coated with a multilayer coating of the invention. Substrates are chosen from the group consisting of metals, polymers, wood, glass, mineral-based materials and composites of any of the aforementioned materials. It is possible to use untreated or pretreated substrates, where the pretreatment regularly depends on the chemical nature of the substrate. A pretreatment of a metallic substrate is for example a zinc phosphating step.

The multilayer coating of the invention comprising a coating composition according to the invention exhibited superior appearance in terms of a small longwave value. This was achieved using a polyester-polyurethane-poly(meth)acrylic hybrid dispersion with a high solids content, which was surprising since dispersions with such a high solids content usually result in coagulation.

Furthermore, a good compatibility of the basecoat compositions is achieved if at least one of the basecoat compositions comprises the polyester-polyurethane-poly(meth)acrylic hybrid dispersion according to the invention.

### EXAMPLES

### Methods

### Solids content

Unless stated otherwise, the solids content was determined in accordance with DIN EN ISO 3251 at 130 °C for 60 min with 1.0 g weighed portion.

### Content of isocyanate

The content of isocyanate (NCO content) was determined by adding an excess of 2 % N,N-dibutylamine solution in xylene to a homogeneous solution of the specimen in acetone / N-ethylpyrrolidone (1:1 Vol.-%) by potentiometric back titration of the amine excess with 0.1 N hydrochloric acid following DIN EN ISO 3251, DIN EN ISO 11909 and DIN EN ISO 14886. The content of a polymer (solids content) in a solution is used to refer to the NCO content of the polymer with respect to the solids content.

### Hydroxyl number

The hydroxyl number was determined following R.-P. Krüger, R. Gnauck and R. Algeier (Plaste und Kautschuk, 20, 274 (1982)) using acetic anhydride in the presence of 4-dimethylaminopyridine as a catalyst in a tetrahydrofuran (THF) / dimethylformamide (DMF) solution at room temperature. The residual excess of acetic anhydride after acetylation is completely hydrolyzed and acetic acid is potentiometric back titrated with alcoholic potassium hydroxide solution.

### Acid number

The acid number was determined in accordance to DIN EN ISO 2114 in a homogenous solution of tetrahydrofuran (THF) / water (9 Vol. parts THF and 1 Vol. part distilled water) with ethanolic potassium hydroxide solution.

### Number average and weight average molecular weights

The number average molecular weight (Mₙ) and weight average molecular weights (M_{w}) were determined by gel permeation chromatography using a poly(meth)acrylate standard and a tetrahydrofuran/acetic acid mixture (1 mol acetic acid per 1 liter tetrahydrofuran).

### Average particle size

In the present application, the average particle size (z-mean) of the particles of the polyester-polyurethane-poly(meth)acrylic hybrid dispersion is determined by measuring the hydrodynamic volume/hydrodynamic radius of the dispersion particles using photon correlation spectroscopy (PCS).

A "Malvern Nano S90" (Malvern Instruments) was used for the measurement at 25 ± 1 °C. The device covers a size range of 3 nm to 3000 nm and was equipped with a 4 mW He-Ne laser at 633 nm. The polyester-polyurethane-poly(meth)acrylic hybrid dispersion was diluted with particle free, deionized water as a dispersing medium to measure the polymer hybrid dispersion in a 1 ml polystyrene cuvette at a suitable scattering intensity. The measurement was performed five times and repeated using a second, freshly prepared sample. The stated average particle size (z-mean) is the arithmetic mean of the average particle size (intensity weighted) of the individual preparations. Polystyrene standards with certified particle sizes between 50 and 3000 nm were used for the validation.

### Viscosity

The viscosity of the polyester-polyurethane during the synthesis was determined using a CAP2000H viscosimeter with spindle 03 at a temperature of 140 °C using a shear rate of 1250 s⁻¹ to 2500 s⁻¹ according to DIN EN ISO 2884-1.

The viscosity of the final polyester-polyurethane dispersion and the final polyester-polyurethane-poly(meth)acrylic hybrid dispersion was determined using a Rheolab QC rotational rheometer with a cylinder cc27 at a temperature of 23 °C using a shear rate of 1000 s⁻¹ according to DIN 53019-1.

### Glass transition temperature

The glass transition temperature was measured in accordance with DIN-EN-ISO 11357-1 and -2. The liquid dispersion was applied on a glass substrate with a drawdown (50 µm) and dried at 130 °C for 60 minutes. Nitrogen gas was used to obtain a defined atmosphere. The dried sample was put into a crucible. If the starting temperature of -90 °C is reached, the temperature was raised at 10 K/min to the selected limit and cooled at same rate to the selected limit (-90 °C to 100 °C). Afterwards, a second run with the identical temperature limits was performed and the glass transition temperature was determined during the heating step in the second run.

### Evaluation of the appearance

The appearance of the coated substrate was assessed using a wave scan measuring device from Byk / Gardner.

A laser beam was directed at an angle of 60 ° onto the surface of the substrate coated with a multilayer coating and the reflected light in the shortwave range (0.3 to 1.2 mm) and in the longwave range (1.2 to 12 mm) was determined. The lower the values of the shortwave (LW) and longwave (LW), the better the appearance. Moreover, the sharpness of an image reflected in the surface of the multilayer structure is determined using the wave scan measuring device. The parameter is called "distinctness of image" (DOI) and the higher the value, the better the appearance.

All amounts given are in parts by weight or gram and percentages are in percent by weight, unless stated otherwise.

### Synthesis of comparative polyester-polyurethane-poly(meth)acrylic hybrid dispersions C1 to C3

A carboxyl-rich polyurethane and a polyester were prepared according to example 3 (COOH-rich polyurethane: 23.3 g dimethylolpropionic acid, 53.4 g H₁₂MDI, 23.3 g 12-hydroxystearic acid; acid number: 141 mg KOH/g) and example 4 (polyester: 375 g 1,6-hexanediol, 118 g trimethylolpropane, 389 g isophthalic acid, 118 g adipic acid; acid number 10 mg KOH/g) of US 10,233,353 B2. A polyester-polyurethane dispersion was synthesized as a basis for the comparative polyester-polyurethane-poly(meth)acrylic hybrid dispersions C1 and C3 in analogy to example 5 of US 10,233,353 B2. Comparative dispersion C1 is a reproduction of example 6 of the afore-mentioned patent. The amounts in **Table 1** are given in gram.

**Table 1**

| **Reactants** | **C1** | **C2** | **C3** |
|---|---|---|---|
| PEUD (42 wt.-% solids) | 480 | 594.8 | 698.4 |
| water | 580.5 | 360.6 | - |
| solids (wt.-%) | 19 | 26 | 42 |
| n-butyl acrylate | 180 | 223 | 261.9 |
| methyl methacrylate | 70.5 | 87.4 | 102.6 |
| t-butyl acrylate | 97.5 | 120.8 | 141.9 |
| solids (wt.-%) | 37.0 | 46.2 | coagulation |

As indicated in **Table 1,** polymerization at 42 wt.-% solids content leads to coagulation and no polyester-polyurethane-poly(meth)acrylic hybrid dispersion was obtained.

### Synthesis of inventive polyester-polyurethane-poly(meth)acrylic hybrid dispersions

### Synthesis of polyesters PE1 and PE2

The compounds of **Table 2** were mixed in a reactor equipped with a stirrer and dean stark apparatus. The temperature was raised to 220 °C and was carefully controlled to reduce monomer losses. Reaction monitoring was done by titration. Polyester PE2 with the indicated properties was obtained. The condensation process of PE1 was conducted until an acid number of less than 10 mg KOH/g was reached. After cooling, polyester PE1 was adjusted with methyl ethyl ketone (MEK) to obtain a solids content of 74 wt.-%.

**Table 2**

| **Reactants** | **PE1** | **PE2** |
|---|---|---|
| neopentyl glycol | 235.6 | - |
| phthalic anhydride | 170.9 | - |
| 1,6-hexanediol | 623.7 | 633.0 |
| trimethylolpropane | 236.6 | - |
| adipic acid | 280.5 | - |
| isophthalic acid | 765.6 | - |
| trimellitic anhydride | - | 253.0 |
| tetrapropenyl succinic anhydride | - | 633.0 |
| tripropylene glycol | - | 464.0 |
| hydroxyl number (mg KOH/g solids) | 135 | 210 |
| acid number (mg KOH/g solids) | 6 | 8 |
| number average molecular weight (Mₙ) (g/mol) | 1450 | 928 |
| solids content (wt.-%) | 74 | 100 |

### Synthesis of polyurethanes PU1 to PU7

In a N₂ purging reactor equipped with a stirrer and reflux condenser, the compounds of **Table 3** were reacted to obtain polyurethanes PU1 to PU7 with the indicated properties.

Dimethylol propionic acid (DMPA), isophorone diisocyanate (IPDI) and methyl ethyl ketone (MEK) were mixed for the synthesis of PU1 and the temperature was carefully raised to 77 °C. The reaction was monitored by titration. After reaching a theoretical NCO content of 14.9 %, cooling was applied and ethylene glycol was added. Until full conversion of the NCO groups was detected by titration, the temperature was kept at 77 °C. Subsequently, trimellitic anhydride was added and the reaction was stopped at constant acid values.

Dimethylol propionic acid, methyl ethyl ketone, ethylene glycol and 4,4'-methylene bis(cyclohexyl isocyanate) were mixed for the synthesis of PU2 and the temperature was kept at 77 °C after the exothermic reaction. The reaction was monitored by titration. After reaching full conversion of the NCO groups, the solids content was adjusted to 60 wt.-% by adding MEK. Subsequently, trimellitic anhydride was added and the reaction was stopped at constant acid values.

PU1 and PU2 were diluted with MEK to obtain a solids content of approximately 70 wt.-%. PU3 and PU4 and PU7 were synthesized in analogy to PU1. According to the manufacture of PU2, PU5 and PU6 were obtained and diluted to a solids content of 55 % or 57 %, respectively.

**Table 3**

| **Reactants** | **PU1** | **PU2** | **PU3** | **PU4** | **PU5** | **PU6** | **PU7** |
|---|---|---|---|---|---|---|---|
| dimethylol propionic acid (DMPA) | 276.9 | 264.2 | 266.9 | 270.4 | 211.2 | 214.5 | 189.2 |
| isophorone diisocyanate (IPDI) | 938.7 | - | - | 458.3 | - | - | - |
| methyl ethyl ketone (MEK) | 1107.6 | 1056.6 | 1067.7 | 1081.4 | 845.0 | 858.0 | 756.8 |
| ethylene glycol | - | 264.2 | - | - | 211.2 | 214.5 | - |
| 4,4'-methylene bis(cyclohexyl isocyanate) (H₁₂MDI) | - | 1056.6 | 534.0 | 540.9 | 422.7 | - | 756.8 |
| tetramethyl xylene diisocyanate | - | - | 497.0 | - | 393.3 | 798.8 | - |
| ethylene glycol | 276.6 | - | 266.9 | 270.4 | - | - | 189.2 |
| trimellitic acid anhydride | 899.9 | 858.5 | 867.5 | 878.7 | 686.5 | 697.1 | 614.9 |
| acid number (mg KOH/g solids) | 273 | 255 | 260 | 265 | 247 | 252 | 265 |
| solids content (wt.-%) | 69 | 70 | 70 | 70 | 55 | 57 | 70 |

### Synthesis of polyester-polyurethane dispersions PEUD1, PEUD2, PEUD4 and polyester-polyurethane PEU3

### Synthesis of polyester-polyurethane dispersion PEUD1

To prepare polyester-polyurethane dispersion 1, 7814.0 g of PE1 and 2218.0 g of PU2 were mixed in a reactor equipped with a stirrer. While applying reduced pressure (20 mbar), the temperature was carefully raised to a maximum of 160 °C. The process was monitored by titration and viscosity measurement at 140 °C. After reaching an acid number of 29 mg KOH/g and a viscosity of approximately 1800 mPa*s (CAP2000H, spindle 03, 140 °C, shear rate 1250 s⁻¹), the temperature was reduced to 115 °C and 160 g dimethyl ethanol amine was added over 10 minutes. Water was added at 90 °C to adjust the solids content of PEUD1 to 55 wt.-%. Further properties are shown in Table 4.

### Synthesis of polyester-polyurethane dispersion PEUD2

To prepare polyester-polyurethane dispersion 2, 1084.0 g of PE2 and 415.8 g of PU2 were mixed in a reactor equipped with a stirrer. While applying reduced pressure (40 to 60 mbar), the temperature was carefully raised to a maximum of 140 °C. The process was monitored by titration and viscosity measurement at 140 °C. After reaching an acid number of 32 mg KOH/g and a viscosity of approximately 1400 mPa*s (CAP2000H, spindle 03, 140 °C, shear rate 2500 s⁻¹), the temperature was reduced to 80 °C and 46.0 g dimethyl ethanol amine was added over 10 minutes. Water was added at 80 °C to adjust the solids content of PEUD2 to 45 wt.-%.

The properties of PEUD1 and PEUD2 are displayed in **Table 4.**

**Table 4**

| **Properties** | **PEUD1** | **PEUD2** |
|---|---|---|
| viscosity (mPa*s)¹ | 140 | 140 |
| acid number (mg KOH/g solids) | 30.9 | 33.0 |
| pH value | 6.8 | 6.3 |
| particle size (PCS, Z-mean) (nm) | 117 | 101 |
| number average molecular weight (Mₙ) (g/mol) | 2,609 | 1,944 |
| weight average molecular weight (M_{w}) (g/mol) | 9,670 | 42,720 |

¹ The viscosity was measured using a Rheolab QC rotational rheometer with a cylinder cc27 at a temperature of 23 °C using a shear rate of 1000 s⁻¹.

### Synthesis of polyester-polyurethane PEU3

To prepare polyester-polyurethane 3, 2441.8 g of PE1 and 693.1 g of PU2 were mixed in a reactor equipped with a stirrer. While applying reduced pressure (50 to 120 mbar), the temperature was carefully raised to a maximum of 140 °C. The process was monitored by titration and viscosity measurement at 140 °C. After reaching an acid number of 26 mg KOH/g and a viscosity of approximately 2000 mPa*s (CAP2000H, spindle 03, 140 °C, shear rate 1250 s⁻¹), the temperature was reduced to 82 °C and 203.0 g n-butyl acrylate was added. Polyester-polyurethane 3 was obtained with a solids content of approximately 90 wt.-%.

### Synthesis of polyester-polyurethane dispersion PEUD4

To prepare polyester-polyurethane dispersion 4, 2168.3 g of PE1 and 831.7 g of PU2 were mixed in a reactor equipped with a stirrer. While applying reduced pressure (50 to 120 mbar), the temperature was carefully raised to a maximum of 140 °C. The process was monitored by titration and viscosity measurement at 140 °C. After reaching an acid number of 28 mg KOH/g and a viscosity of approximately 1800 mPa*s (CAP2000H, spindle 03, 140 °C, shear rate 1250 s⁻¹), the temperature was reduced to 100 °C and 187.3 g butyl diglycol was added. 60.0 g dimethyl ethanol amine was added over a period of 10 minutes. Afterwards, 1925.0 g water was added slowly at 95 °C. The polyester-polyurethane dispersion 4 was obtained with a solids content of 48.2 wt.-%.

### Synthesis of inventive polyester-polyurethane-poly(meth)acrylic hybrid dispersions B1 to B17 by emulsion polymerization

### Examples B1 to B11

The synthesis was conducted in a 3.5 L steel reactor using an anchor stirrer for B1 to and B11. The stirrer was set to a low setting (50 to 100 rpm). Examples B9 and B10 made use of a glass reactor equipped with a stirrer at 150 rpm. The reactor uses heat transfer oil for temperature regulation. Undiluted PEUD1 was used for the synthesis of B1 to B3, B5, B7 and B10 and undiluted PEUD2 was used for the synthesis of B9. For the synthesis of B4 and B6, PEUD1 was diluted with 569 g deionized water. For the synthesis of B8, PEUD1 was neutralized with 17.2 g dimethylethanolamine (DMEA) and diluted with 26.9 g butyldiglycol and 792.2 g of deionized water to obtain a dispersion with 40 wt.-% solids and neutralization level of approximately 70 %. Undiluted or diluted PEUD1 or PEUD2 were heated to 80 °C. The amounts in **Table 5** are given in gram.

For Examples **B1** to **B7** the (meth)acrylic monomer or monomers were mixed with 2 g of tert-butyl-peroxy-2-ethylhexanol. The respective mixtures were added slowly at 80 °C in the course of 3 hours. Afterwards 0.4 g of tert-butyl-peroxy-2-ethylhexanol were added and it was stirred at 80 °C for another 2 hours.

For Example **B8** the (meth)acrylic monomer and 2.4 g of tert-butyl-peroxy-2-ethylhexanol were added slowly at 80 °C in the course of 2.5 hours. Afterwards 0.4 g of tert-butyl-peroxy-2-ethylhexanol were added and it was stirred at 80 °C for another 2 hours.

For Example **B9** the (meth)acrylic monomer was mixed with 0.3 g of tert-butyl-peroxy-2-ethylhexanol. The respective mixture was added slowly at 80 °C in the course of 3 hours. Afterwards it was stirred at 80 °C for another 2 hours.

For Example **B10** the (meth)acrylic monomers were mixed with 0.2 g of tert-butyl-peroxy-2-ethylhexanol. The respective mixture was added slowly at 80 °C in the course of 3 hours. Afterwards it was stirred at 80 °C for 1 hour. Subsequently, 0.1 g of tert-butyl-peroxy-2-ethylhexanol were added and it was stirred at 80 °C for another 1 hour.

For the synthesis of **B11,** PEUD1 was diluted with 79.9 g of butyldiglycol and 257.8 g deionized water. Subsequently, the (meth)acrylic monomers and 1.3 g of tert-butyl-peroxy-2-ethylhexanol were added slowly at 80 °C in the course of 3 hours. Afterwards, the dispersion was stirred at 80 °C for another 2 hours.

After the reaction, during the cooling period, the dispersions B1 to B3, B5 and B10 were diluted using 230 g (B1, B2), 105 g (B3, B5) or 21 g (B10) deionized water. Dispersions B4, B6 to B9 and B11 were not further diluted.

**Table 5**

| **Reactants** | **B1** | **B2** | **B3** | **B4** | **B5** | **B6** | **B7** | **B8** | **B9** | **B10** | **B11** |
|---|---|---|---|---|---|---|---|---|---|---|---|
| PEUD1 | 1000 | 1000 | 1000 | 1000 | 1000 | 1000 | 1500 | 534.7 | - | 183 | 1300 |
| PEUD2 | - | - | - | - | - | - | - | - | 150 | - | - |
| butyldiglycol | - | - | - | - | - | - | - | 26.9 | - | - | 79.9 |
| deionized water | - | - | - | 569 | - | 569 | - | 792.2 | - | - | 257.8 |
| ethylhexyl methacrylate | 140 | - | - | - | - | - | - | - | - | - | - |
| n-butyl acrylate | 140 | - | 80 | 80 | - | 280 | - | 280 | - | - | 100.4 |
| t-butyl acrylate | - | 280 | 200 | 200 | - | - | - | - | 33.3 | - | 17.6 |
| n-butyl methacrylate | - | - | - | - | 280 | - | 420 | - | - | - | - |
| allyl methacrylate | - | - | - | - | - | - | 4.2 | - | - | - | - |
| acrylic acid | - | - | - | - | - | - | - | - | - | 3 | - |
| hydroxyethyl methacrylate | - | - | - | - | - | - | - | - | - | 17.6 | 47.0 |
| solids content (wt.-%) | 55.5 | 54.9 | 60.5 | 43.6 | 61.4 | 44.8 | 61.5 | 50.1 | 56.2 | 45.8 | 46.3 |

The properties of dispersions B1 to B11 are indicated in **Table 6.**

**Table 6**

| **Properties** | **B1** | **B2** | **B3** | **B4** | **B5** | **B6** | **B7** | **B8** | **B9** | **B10** | **B11** |
|---|---|---|---|---|---|---|---|---|---|---|---|
| glass transition temperature (°C) | 1 | -47, 0 | 5 | 5 | 6 | -45 | 5 | -48, +5 | -1, +39 | 0 | 3 |
| acid number (mg KOH/g solids) | 20.1 | 19.3 | 18.8 | 20.4 | 18.1 | 19.1 | 17.2 | 24.1 | 22.0 | 41.1 | 24.6 |
| viscosity (cc27, 1000 1/s) (mPa*s) | 44 | 46 | 195 | 10 | 176 | 13.8 | 131 | 12.6 | 470 | 2150 | 247 |
| particle size (PCS, Z-mean) (nm) | 203 | 192 | 220 | 144 | 193 | 135 | 287 | 140 | 206 | 1284 | 284 |

### Examples B12 to B14

For the synthesis of dispersions B12 to B14, the same equipment was used as for Examples B1 to B6 and B8. The stirring speed was set to 150 rpm. According to Table 7, 509.7 g of polyester-polyurethane 3 were diluted with 62.9 g (meth)acrylate prior the addition of 13.5 g dimethyl ethanol amine. Over a period of 15 minutes, 463.4 g water was added at 80 °C to obtain a monomer swollen polyester-polyurethane dispersion with a theoretical solids content of approximately 43.7 wt.-%. Afterwards 0.6 g tert-butyl-peroxy-2-ethylhexanol was added in the course of 2 hours and the temperature was kept at 80 °C for 2 hours. Additional 0.3 g tert-butyl-peroxy-2-ethylhexanol was added and stirring was continued for 1 hour.

### Example B15

For the synthesis of dispersion B15, the same equipment was used as for Examples B1 to B6 and B8. The stirring speed was set to 150 rpm. At 110 °C 1456.0 g of polyester-polyurethane 3 were diluted with 316.0 g t-butyl acrylate, 197.5 g styrene and 323.9 g n-butyl acrylate. The temperature was reduced to 95 °C and 220.0 g butyldiglycol was added prior the addition of 63.2 g dimethyl ethanol amine. After 10 minutes, 3100.0 g water was added at 80 °C to obtain a monomer swollen polyester-polyurethane dispersion with a theoretical solids content of approximately 23.1 wt.-%. 2500.0 g of this monomer swollen polyester-polyurethane dispersion were heated to 80 °C and 8.2 g tert-butyl-peroxy-2-ethylhexanol was added over a course of 2.5 h and the reaction temperature was maintained for another 2 h at 80 °C. 2.0 g tert-butyl-peroxy-2-ethylhexanol was added and stirring was continued for 1 h.

### Examples B16 and B17

For the synthesis of dispersions B16 and B17, the same equipment was used as for Examples B1 to B6 and B8. The stirring speed was set to 150 rpm. According to Table 7, 1065.1 g of PEUD 4 were diluted with 185.7 g water and heated to 80 °C. 127.3 g n-butyl acrylate, 73.5 g t-butyl acrylate and 46.0 g styrene were added over a course of 3 hours. In parallel to the monomer dosage, 2.4 g tert-butyl-peroxy-2-ethylhexanol (B16) or a mixture of 52.5 g water and 4.8 g ammonium peroxydisulfate (B17) was added into the reactor. For the synthesis of dispersion B16, 1.0 g tert-butyl-peroxy-2-ethylhexanol was used and the reaction temperature was kept at 80 °C for another 2 hours.

**Table 7**

| **Reactants** | **B12** | **B13** | **B14** | **B15** | **B16** | **B17** |
|---|---|---|---|---|---|---|
| PEU3 | 509.7 | 509.7 | 509.7 | 2500.0 | - | - |
| PEUD4 | - | - | - | - | 1065.1 | 1065.1 |
| n-butyl acrylate | - | - | - | 323.9 | 127.3 | 127.3 |
| methyl methacrylate | 62.9 | - | - | - | - | - |
| t-butyl acrylate | - | - | 62.9 | 316.0 | 73.5 | 73.5 |
| ethylhexyl methacrylate | - | 62.9 | - | - | - | - |
| styrene | - | - | - | 197.5 | 46.0 | 46.0 |
| butyldiglycol | - | - | - | 220.0 | - | - |
| DMEA | 13.5 | 13.5 | 13.5 | 63.2 | - | - |
| deionized water | 463.4 | 463.4 | 463.4 | 3100.0 | 185.7 | 185.7 |
| tert-butyl-peroxy-2-ethylhexanol | 0.9 | 0.9 | 0.9 | 10.2 | 3.4 | - |
| ammonium peroxydisulfate | - | - | - | - | - | 6.9 |
| solids content (wt.-%) | 51.4 | 53.9 | 53.8 | 48.3 | 50.4 | 51.5 |

The acid number of dispersions B12 to B17 are indicated in **Table 8.**

**Table 8**

| **Properties** | **B12** | **B13** | **B14** | **B15** | **B16** | **B17** |
|---|---|---|---|---|---|---|
| acid number (mg KOH/g solids) | 26.4 | 26.6 | 25.9 | 21.8 | 22.4 | 23.1 |

As apparent from **Tables 5** and **7,** the inventive polyester-polyurethane-poly(meth)acrylic hybrid dispersions exhibit a solids content much larger than 40 wt.-% and no coagulation was observed. This was surprising, since a solids content of 42 wt.-% in comparative polyester-polyurethane-poly(meth)acrylic hybrid dispersion C3 resulted already in coagulation, while polyester-polyurethane-poly(meth)acrylic hybrid dispersion do not coagulate with a solids content with even as high as about 60 wt.-% (B3).

### Preparation of basecoat compositions comprising inventive polyester-polyurethane-poly(meth)acrylic hybrid dispersions B1 to B6 and B11

### Preparation of a milling base MB1

A milling base was prepared of 19.1 parts by weight of deionized water, 0.9 parts by weight of 10% dimethyl ethanolamine solution, 8.3 parts by weight of a water-based polyester having a solids content of 60.0 ± 1.0 wt.-% (measured for 1 h at 130 °C) and an acid number of 29 to 34 mg KOH/g solids, 15 parts by weight of titanium dioxide, 0.5 parts by weight of 2-ethylhexanol, 34.4 parts by weight of barium sulfate, 1.8 parts by weight of additives, 2.6 parts by weight of carbon black and 17.4 parts by weight of a polyurethane dispersion having a solids content of 33.0 ± 1.0 wt.-% (measured for 1 h at 130 °C) and an acid number of 19 to 23 mg KOH/g solids.

### Preparation of basecoat compositions

Basecoat compositions were prepared by mixing the components of **Table 9.** Inventive basecoat compositions BC-11 to BC-17 comprise the inventive polyester-polyurethane-poly(meth)acrylic hybrid dispersions B1 to B6 and B11, while comparative basecoat compositions BC-C1, BC-C2 and BC-C3 comprise either a comparative aliphatic polycarbonateester polyetherpolyurethane dispersion (Impranil^{®} DLU) (BC-C1), the polyurethane dispersion PEUD-1, which is an intermedium product without adding and polymerizing ethylenically unsaturated monomers (BC-C2) or comparative polyester-polyurethane-poly(meth)acrylic hybrid dispersion C2 (cf. **Table 1),** which has been prepared in analogy to example 5 of US 10,233,353 B2 (BC-C3). As main resins in all basecoat compositions serve typical polyurethane, polyester and polyacrylate dispersions. Since the basecoat compositions were one-pack compositions as a typical crosslinking agent for such compositions a melamine-formaldehyde crosslinker was used. The inventive or comparative basecoat composition was adjusted with water to obtain a basecoat composition with a solids content of 27.5%.

**Table 9**

| **Reactants** | **Comparative basecoat composition** | | | **Inventive basecoat composition** | | | | | | |
|---|---|---|---|---|---|---|---|---|---|---|
| | **BC-C1** | **BC-C2** | **BC-C3** | **BC-I1** | **BC-I2** | **BC-I3** | **BC-I4** | **BC-I5** | **BC-I6** | **BC-I7** |
| Impranil^{®} DLU | 12.4 | - | - | - | - | - | - | - | - | - |
| PEUD1 | - | 13.5 | - | - | - | - | - | - | - | - |
| C2 | - | - | 16.1 | - | - | - | - | - | - | - |
| B1 | - | - | - | 13.4 | - | - | - | - | - | - |
| B2 | - | - | - | - | 13.6 | - | - | - | - | - |
| B3 | - | - | - | - | - | 12.3 | - | - | - | - |
| B4 | - | - | - | - | - | - | 17.1 | - | - | - |
| B5 | - | - | - | - | - | - | - | 12.1 | - | - |
| B6 | - | - | - | - | - | - | - | - | 16.6 | - |
| B11 | - | - | - | - | - | - | - | - | - | 16.1 |
| Polyurethane dispersion¹ | 2.0 | 2.0 | 2.0 | 2.0 | 2.0 | 2.0 | 2.0 | 2.0 | 2.0 | 2.0 |
| Polyester aqueous solution² | 2.9 | 2.9 | 2.9 | 2.9 | 2.9 | 2.9 | 2.9 | 2.9 | 2.9 | 2.9 |
| Polyacrylate dispersion³ | 4.8 | 4.8 | 4.8 | 4.8 | 4.8 | 4.8 | 4.8 | 4.8 | 4.8 | 4.8 |
| OH-functional acrylic copolymer (Neocryl XK 110) | 5.7 | 5.7 | 5.7 | 5.7 | 5.7 | 5.7 | 5.7 | 5.7 | 5.7 | 5.7 |
| Melamine-formaldehyde crosslinker (Mycoat 8202) | 11.6 | 11.6 | 11.6 | 11.6 | 11.6 | 11.6 | 11.6 | 11.6 | 11.6 | 11.6 |
| Additive | 0.7 | 0.7 | 0.7 | 0.7 | 0.7 | 0.7 | 0.7 | 0.7 | 0.7 | 0.7 |
| Butyldiglycol | 3.8 | 3.8 | 3.8 | 3.8 | 3.8 | 3.8 | 3.8 | 3.8 | 3.8 | 3.8 |
| 10% Dimethyl ethanolamine solution | 0.4 | 0.4 | 0.4 | 0.4 | 0.4 | 0.4 | 0.4 | 0.4 | 0.4 | 0.4 |
| Milling base MB1 | 46.2 | 46.2 | 46.2 | 46.2 | 46.2 | 46.2 | 46.2 | 46.2 | 46.2 | 46.2 |
| water | balance to obtain application viscosity⁴ | | | | | | | | | |

| | | | | | | | | | | |
|---|---|---|---|---|---|---|---|---|---|---|
| ¹Polyurethane dispersion: solids content: 32 to 34 %; Acid number: 19 to 23 mg KOH/g solids, hydroxyl number: 17 mg KOH/g solids. Polyurethane dispersion is known from WO2016000947A1. ²Polyester aqueous solution: solids content: 60 ± 1.0 % (measured at 1 h at 130 °C); Acid number: 29 to 34 mg KOH/g solids. Polyester aqueous solution is known from DE4009858, Example D. ³Polyacrylate dispersion: solids content: 25.5 to 27.5 %, Acid number: 16.6 to 17.6 mg KOH/g solids, hydroxyl number 16.5 to 17.5 mg KOH/g solids. Polyacrylate dispersion is known from WO2017148796A1. ⁴Application viscosity: 85 ± 25 mPa*s (RheolabQC, cc27, using a shear rate of 1000 s⁻¹) | | | | | | | | | | |

### Preparation of basecoat composition 2 (BC2)

A BC2 formulation was prepared of 26.5 parts by weight of deionized water, 3.1 parts by weight of 10 % dimethyl ethanolamine solution, 4.5 parts by weight of a water-based polyester having a solids content of 60.0 ± 1.0 wt.-% (measured for 1 h at 130 °C) and an acid number of 29 to 34 mg KOH/g solids, 6.8 parts by weight of a rheology agent, 2.0 parts by weight of 2-ethylhexanol, 9.2 parts by weight of butoxypropanol, 1.0 parts by weight of dipropylene glycol methylether, 4.1 parts by weight of additives, 14.0 parts by weight of carbon black, 7.5 parts by weight of melamine resins, 3.0 parts by weight of a first polyurethane polyacrylate dispersion having a solids content of 35.5 ± 1.0 wt.-% (measured for 1 h at 130 °C) and an acid number of 32 to 35 mg KOH/g solids, a second polyurethane polyacrylate dispersion having a solids content of 36.0 ± 1.0 wt.-% (measured for 1 h at 130 °C), a third polyurethane polyacrylate dispersion having a solids content of 44.0 ± 1.0 wt.-% (measured for 1 h at 130 °C) and an acid number of 30 to 32 mg KOH/g solids and a OH functional waterborne polyacrylate having a solids content of 46.5 ± 1.0 wt.-% (measured for 1 h at 130 °C).

### Application of the coating compositions

The spray booth was kept at 25 °C and 70 % humidity. The basecoats BC-C1 to BC-C3 and BC-I1 to BC-I7 were applied with a layer thickness of approximately 25 µm by electrostatic spray application (ESTA) onto a panel with an electronic dip coating (BASF Coatings GmbH, Cathoguard). After 3.5 minutes flash-off time at 80 °C, basecoat BC2 was applied with a layer thickness of approximately 12 µm (BC-C1, BC-C2 and BC-I1 to BC-I6) or with a layer thickness of approximately 24 µm (BC-C3 and BC-17). After 3.5 minutes flash-off time at 80 °C, a clearcoat (BASF Coatings GmbH, UniGloss) was applied with a layer thickness of approximately 40 µm. Afterwards, the paint was cured for 30 minutes at 140 °C.

### Testing of the coating layers

The resulting multilayer coatings were evaluated for their appearance in terms of longwave (LW) and shortwave (SW) and for gloss in terms of DOI (distinctness of image) by an orange peel meter (BYK 4840 wave scan dual, from BYK-Gardner GmbH), according to DIN EN ISO 2813.

**Table 10**

| BC1 | Appearance | | |
|---|---|---|---|
| | LW | SW | DOI |
| BC-C1 | 23.1 | 27.5 | 90.6 |
| BC-C2 | 12.2 | 27.3 | 88.5 |
| BC-C3 | 9.2 | 28.1 | 83.8 |
| BC-I1 | 8.3 | 25.3 | 89.0 |
| BC-I2 | 9.9 | 25.5 | 87.1 |
| BC-I3 | 9.1 | 26.1 | 86.9 |
| BC-I4 | 8.9 | 25.4 | 87.1 |
| BC-I5 | 8.3 | 25.4 | 88.7 |
| BC-I6 | 8.2 | 24.6 | 88.4 |
| BC-I7 | 4.3 | 31.5 | 86.5 |

The multilayer coatings comprising a polyester-polyurethane-poly(meth)acrylic hybrid dispersion as basecoat 1 exhibit a superior appearance in terms of a small longwave value since the values are lower compared to multilayer coatings comprising a state of the art basecoat 1 comprising an aliphatic polycarbonate ester polyether polyurethan dispersion (Impranil^{®} DLU). The comparison to the multilayer coating comprising PEUD-1 as basecoat 1 demonstrates that additional emulsion polymerization with acrylate monomers improves the appearance of the multilayer coating since PEUD-1 is also present in the inventive dispersions B1 to B7. It was surprising that the emulsion polymerization of a polyester-polyurethane as described above with ethylenically unsaturated monomers results in an improved appearance in terms of a small longwave value. Moreover, the multilayer coatings comprising a polyester-polyurethane-poly(meth)acrylic hybrid dispersion as basecoat 1 exhibit a superior appearance in terms of a small longwave value in combination with a small shortwave value and a high DOI value.

Furthermore, the compatibility of the basecoat compositions comprising the inventive polyester-polyurethane-poly(meth)acrylic hybrid dispersion to the second basecoat compositions was improved compared to the comparative basecoat compositions.

## Claims

1. Polyester-polyurethane-poly(meth)acrylic hybrid dispersion obtainable
(a) by esterifying
at least one polyurethane containing carboxyl groups, the at least one polyurethane having an acid number of more than 200 mg KOH/g to 400 mg KOH/g and at least one or more terminal carboxyl groups; with
at least one polyester containing hydroxyl groups, the polyester having a hydroxyl number of 50 mg KOH/g to 300 mg KOH/g,
to obtain a polyester-polyurethane; followed by
(b) polymerizing ethylenically unsaturated monomers at least comprising (meth)acrylic monomers by radical polymerization in the presence of the polyester-polyurethane of step (a), wherein one or more solvents are present and/or employed during step (a) and/or (b) and/or added after step (b), thereby obtaining the polyester-polyurethane-poly(meth)acrylic hybrid dispersion.

2. Polyester-polyurethane-poly(meth)acrylic hybrid dispersion according to claim 1, **characterized in that** the at least one polyurethane in step (a) has at least two carboxyl groups at each of both ends and/or **in that** the at least one polyurethane and at least one polyester in step (a) are esterified in the presence of one or more solvents to obtain a polyester-polyurethane dispersion.

3. Polyester-polyurethane-poly(meth)acrylic hybrid dispersion according to claims 1 or 2, **characterized in that** the polyester-polyurethane obtained in step (a) has an acid number in the range of 10 to 50 mg KOH/g solids.

4. Polyester-polyurethane-poly(meth)acrylic hybrid dispersion according to any one of claims 1 to 3, **characterized in that** the solids content of the polyester-polyurethane dispersion obtained in step (a) is ≥ 40 wt.-% and/or **in that** the polyester-polyurethane dispersion obtained in step (a) is aqueous.

5. Polyester-polyurethane-poly(meth)acrylic hybrid dispersion according to any one of claims 1 to 4, **characterized in that** the ethylenically unsaturated monomers in step (b) are added to the polyester-polyurethane of step (a) prior to the addition of the radical initiator or simultaneously with the radical initiator.

6. Polyester-polyurethane-poly(meth)acrylic hybrid dispersion according to any one of claims 1 to 5, **characterized in that** the radical polymerization of the ethylenically unsaturated monomers in step (b) is initiated by a water-soluble initiator or a water-insoluble initiator.

7. Polyester-polyurethane-poly(meth)acrylic hybrid dispersion according to any one of claims 1 to 6, **characterized in that** the (meth)acrylic monomers in step (b) comprise alkyl(meth)acrylate monomers.

8. Polyester-polyurethane-poly(meth)acrylic hybrid dispersion according to any one of claims 1 to 7, **characterized in that** the polyester-polyurethane-poly(meth)acrylic hybrid has a glass transition temperature, as measured according to the description, of -50 °C to +50 °C.

9. Polyester-polyurethane-poly(meth)acrylic hybrid dispersion according to any one of claims 1 to 8, **characterized in that** the solids content of the polyester-polyurethane-poly(meth)acrylic hybrid dispersion is ≥ 40 wt.-%.

10. Polyester-polyurethane-poly(meth)acrylic hybrid dispersion according to any one of claims 1 to 9, **characterized in that** the polyester-polyurethane-poly(meth)acrylic hybrid comprises 45 to 90 wt.-% of polyester-polyurethane and 10 to 55 wt.-% of poly(meth)acrylate, based on polyester-polyurethane-poly(meth)acrylic hybrid solids.

11. Polyester-polyurethane-poly(meth)acrylic hybrid dispersion according to any one of claims 1 to 10, **characterized in that** the polyester-polyurethane of step (a) is physically mixed with the poly(meth)acrylate of step (b) and/or is covalently bound to the poly(meth)acrylate of step (b).

12. Polyester-polyurethane-poly(meth)acrylic hybrid dispersion according to any one of claims 1 to 11, **characterized in that** the polyester-polyurethane-poly(meth)acrylic hybrid, which has been prepared using one or more monoethylenically unsaturated monomers, has a number average molecular weight (Mₙ) of 2,500 g/mol to 5,000 g/mol and/or weight average molecular weight (M_{w}) of 25,000 g/mol to 550,000 g/mol.

13. Method to produce a polyester-polyurethane-poly(meth)acrylic hybrid dispersion as defined in claim 1
(a) by esterifying
at least one polyurethane containing carboxyl groups, the at least one polyurethane having an acid number of more than 200 mg KOH/g to 400 mg KOH/g and at least one or more terminal carboxyl groups; with
at least one polyester containing hydroxyl groups, the polyester having a hydroxyl number of 50 mg KOH/g to 300 mg KOH/g,
to obtain a polyester-polyurethane; followed by
(b) polymerizing ethylenically unsaturated monomers at least comprising (meth)acrylic monomers by radical polymerization in the presence of the polyester-polyurethane of step (a), wherein one or more solvents are present and/or employed during step (a) and/or (b) and/or added after step (b), thereby obtaining the polyester-polyurethane-poly(meth)acrylic hybrid dispersion.

14. Coating composition comprising a polyester-polyurethane-poly(meth)acrylic hybrid dispersion as defined in any one of claims 1 to 12.

15. Coating layer formed from a coating composition according to claim 14.

16. A substrate coated with a coating layer according to claim 15.

17. Use of the coating composition according to claim 14 in automotive coating.

18. A method of making a multilayer coating, comprising the steps of
a. applying one or more basecoat compositions to form one or more basecoat layers on a substrate, wherein at least one basecoat composition comprises the polyester-polyurethane-poly(meth)acrylic hybrid dispersion as defined in any one of claims 1 to 12,
b. applying a clearcoat composition on top of the one or more basecoat layers to form a clearcoat layer,
c. simultaneously curing of the one or more basecoat layers and clearcoat layer or individually curing one or more layers obtained in steps a. and b. before the subsequent coating layer is applied or individually curing all layers obtained in steps a. and b.

## Patentansprüche

1. Polyester-Polyurethan-Poly(meth)acryl-Hybriddispersion, erhältlich
(a) durch Veresterung von
wenigstens einem Polyurethan, das Carboxylgruppen enthält, wobei das wenigstens eine Polyurethan eine Säurezahl von mehr als 200 mg KOH/g bis 400 mg KOH/g und wenigstens eine oder mehrere endständige Carboxylgruppen aufweist; mit
wenigstens einem Polyester, der Hydroxygruppen enthält, wobei der Polyester eine Hydroxyzahl von 50 mg KOH/g bis 300 mg KOH/g aufweist,
um ein Polyester-Polyurethan zu erhalten; gefolgt von
(b) Polymerisation von ethylenisch ungesättigten Monomeren, die wenigstens (Meth)acrylmonomere umfassen, durch radikalische Polymerisation in Gegenwart des Polyester-Polyurethans von Schritt (a), wobei bei Schritt (a) und/oder (b) ein oder mehrere Lösungsmittel vorhanden sind und/oder eingesetzt werden und/oder nach Schritt (b) zugegeben werden, um dadurch die Polyester-Polyurethan-Poly(meth)acryl-Hybriddispersion zu erhalten.

2. Polyester-Polyurethan-Poly(meth)acryl-Hybriddispersion nach Anspruch 1, **dadurch gekennzeichnet, dass** das wenigstens eine Polyurethan bei Schritt (a) wenigstens zwei Carboxylgruppen an jedem der beiden Enden aufweist und/oder dass das wenigstens eine Polyurethan und wenigstens ein Polyester bei Schritt (a) in Gegenwart eines oder mehrerer Lösungsmittel verestert werden, um eine Polyester-Polyurethan-Dispersion zu erhalten.

3. Polyester-Polyurethan-Poly(meth)acryl-Hybriddispersion nach Anspruch 1 oder 2, **dadurch gekennzeichnet, dass** das bei Schritt (a) erhaltene Polyester-Polyurethan eine Säurezahl in dem Bereich von 10 bis 50 mg KOH/g Feststoff aufweist.

4. Polyester-Polyurethan-Poly(meth)acryl-Hybriddispersion nach einem der Ansprüche 1 bis 3, **dadurch gekennzeichnet, dass** der Feststoffgehalt der bei Schritt (a) erhaltenen Polyester-Polyurethan-Dispersion ≥ 40 Gew.-% beträgt und/oder dass die bei Schritt (a) erhaltene Polyester-Polyurethan-Dispersion wässrig ist.

5. Polyester-Polyurethan-Poly(meth)acryl-Hybriddispersion nach einem der Ansprüche 1 bis 4, **dadurch gekennzeichnet, dass** die ethylenisch ungesättigten Monomere bei Schritt (b) dem Polyester-Polyurethan aus Schritt (a) vor der Zugabe des Radikalinitiators oder gleichzeitig mit dem Radikalinitiator zugegeben werden.

6. Polyester-Polyurethan-Poly(meth)acryl-Hybriddispersion nach einem der Ansprüche 1 bis 5, **dadurch gekennzeichnet, dass** die radikalische Polymerisation der ethylenisch ungesättigten Monomere bei Schritt (b) durch einen wasserlöslichen Initiator oder einen wasserunlöslichen Initiator ausgelöst wird.

7. Polyester-Polyurethan-Poly(meth)acryl-Hybriddispersion nach einem der Ansprüche 1 bis 6, **dadurch gekennzeichnet, dass** die (Meth)acrylmonomere bei Schritt (b) Alkyl(meth)acrylatmonomere umfassen.

8. Polyester-Polyurethan-Poly(meth)acryl-Hybriddispersion nach einem der Ansprüche 1 bis 7, **dadurch gekennzeichnet, dass** das Polyester-Polyurethan-Poly(meth)acryl-Hybrid eine gemäß der Beschreibung gemessene Glasübergangstemperatur von -50 °C bis +50 °C aufweist.

9. Polyester-Polyurethan-Poly(meth)acryl-Hybriddispersion nach einem der Ansprüche 1 bis 8, **dadurch gekennzeichnet, dass** der Feststoffgehalt der Polyester-Polyurethan-Poly(meth)acryl-Hybriddispersion ≥ 40 Gew.-% beträgt.

10. Polyester-Polyurethan-Poly(meth)acryl-Hybriddispersion nach einem der Ansprüche 1 bis 9, **dadurch gekennzeichnet, dass** das Polyester-Polyurethan-Poly(meth)acryl-Hybrid 45 bis 90 Gew.-% Polyester-Polyurethan und 10 bis 55 Gew.-% Poly(meth)acrylat, bezogen auf Polyester-Polyurethan-Poly(meth)acryl-Hybrid-Feststoffe, umfasst.

11. Polyester-Polyurethan-Poly(meth)acryl-Hybriddispersion nach einem der Ansprüche 1 bis 10, **dadurch gekennzeichnet, dass** das Polyester-Polyurethan von Schritt (a) physikalisch mit dem Poly(meth)acrylat von Schritt (b) vermischt und/oder kovalent an das Poly(meth)acrylat von Schritt (b) gebunden ist.

12. Polyester-Polyurethan-Poly(meth)acryl-Hybriddispersion nach einem der Ansprüche 1 bis 11, **dadurch gekennzeichnet, dass** das Polyester-Polyurethan-Poly(meth)acryl-Hybrid, das unter Verwendung eines oder mehrerer monoethylenisch ungesättigter Monomere hergestellt worden ist, ein anzahlgemitteltes Molekulargewicht (Mₙ) von 2.500 g/mol bis 5.000 g/mol und/oder ein gewichtsgemitteltes Molekulargewicht (M_{w}) von 25.000 g/mol bis 550.000 g/mol aufweist.

13. Verfahren zur Herstellung einer Polyester-Polyurethan-Poly(meth)acryl-Hybriddispersion nach Anspruch 1
(a) durch Veresterung von
wenigstens einem Polyurethan, das Carboxylgruppen enthält, wobei das wenigstens eine Polyurethan eine Säurezahl von mehr als 200 mg KOH/g bis 400 mg KOH/g und wenigstens eine oder mehrere endständige Carboxylgruppen aufweist; mit
wenigstens einem Polyester, der Hydroxygruppen enthält, wobei der Polyester eine Hydroxyzahl von 50 mg KOH/g bis 300 mg KOH/g aufweist,
um ein Polyester-Polyurethan zu erhalten; gefolgt von
(b) Polymerisation von ethylenisch ungesättigten Monomeren, die wenigstens (Meth)acrylmonomere umfassen, durch radikalische Polymerisation in Gegenwart des Polyester-Polyurethans von Schritt (a), wobei bei Schritt (a) und/oder (b) ein oder mehrere Lösungsmittel vorhanden sind und/oder eingesetzt werden und/oder nach Schritt (b) zugegeben werden, um dadurch die Polyester-Polyurethan-Poly(meth)acryl-Hybriddispersion zu erhalten.

14. Beschichtungszusammensetzung umfassend eine Polyester-Polyurethan-Poly(meth)acryl-Hybriddispersion nach einem der Ansprüche 1 bis 12.

15. Beschichtungsschicht, gebildet aus einer Beschichtungszusammensetzung nach Anspruch 14.

16. Substrat, beschichtet mit einer Beschichtungsschicht nach Anspruch 15.

17. Verwendung der Beschichtungszusammensetzung nach Anspruch 14 bei Automobilbeschichtung.

18. Verfahren zur Herstellung einer mehrschichtigen Beschichtung, umfassend die folgenden Schritte:
a. Aufbringen einer oder mehrerer Grundschichtzusammensetzungen, um eine oder mehrere Grundschichten zu bilden, auf ein Substrat, wobei wenigstens eine Grundschichtzusammensetzung die Polyester-Polyurethan-Poly(meth)acryl-Hybriddispersion nach einem der Ansprüche 1 bis 12 umfasst,
b. Aufbringen einer Klarschichtzusammensetzung auf die eine oder mehreren Grundschichten, um eine Klarschicht zu bilden,
c. gleichzeitiges Aushärten der einen oder mehreren Grundschichten und der Klarschicht oder einzelnes Aushärten einer oder mehrerer bei den Schritten a. und b. erhaltenen Schichten vor dem Aufbringen der nachfolgenden Beschichtungsschicht, oder einzelnes Aushärten aller bei den Schritten a. und b. erhaltenen Schichten.

## Revendications

1. Dispersion hybride polyester-polyuréthane-poly(méth)acrylique pouvant être obtenue
(a) par estérification
d'au moins un polyuréthane contenant des groupes carboxyle, l'au moins un polyuréthane ayant un indice d'acide de plus de 200 mg KOH/g à 400 mg KOH/g et au moins un ou plusieurs groupes carboxyle terminaux ; avec au moins un polyester contenant des groupes hydroxyle, le polyester ayant un indice d'hydroxyle de 50 mg KOH/g à 300 mg KOH/g,
pour obtenir un polyester-polyuréthane ; suivi par
(b) polymérisation de monomères éthyléniquement insaturés au moins comprenant des monomères (méth)acryliques par polymérisation radicalaire en présence du polyester-polyuréthane de l'étape (a), un ou plusieurs solvants étant présent(s) et/ou employés lors de l'étape (a) et/ou (b) et/ou ajoutés après l'étape (b), obtenant ainsi la dispersion hybride polyester-polyuréthane-poly(méth)acrylique.

2. Dispersion hybride polyester-polyuréthane-poly(méth)acrylique selon la revendication 1, **caractérisée en ce que** l'au moins un polyuréthane dans l'étape (a) présente au moins deux groupes carboxyle au niveau de chacune des deux extrémités et/ou **en ce que** l'au moins un polyuréthane et au moins un polyester dans l'étape (a) sont estérifiés en présence d'un ou plusieurs solvants pour obtenir une dispersion polyester-polyuréthane.

3. Dispersion hybride polyester-polyuréthane-poly(méth)acrylique selon la revendication 1 ou 2, **caractérisée en ce que** le polyester-polyuréthane obtenu dans l'étape (a) présente un indice d'acide dans la plage de 10 à 50 mg KOH/g de solides.

4. Dispersion hybride polyester-polyuréthane-poly(méth)acrylique selon l'une quelconque des revendications 1 à 3, **caractérisée en ce que** la teneur en solides de la dispersion polyester-polyuréthane obtenue à l'étape (a) est ≥ 40 % en poids et/ou **en ce que** la dispersion polyester-polyuréthane obtenue à l'étape (a) est aqueuse.

5. Dispersion hybride polyester-polyuréthane-poly(méth)acrylique selon l'une quelconque des revendications 1 à 4, **caractérisée en ce que** les monomères éthyléniquement insaturés de l'étape (b) sont ajoutés au polyester-polyuréthane de l'étape (a) avant l'ajout de l'initiateur de radicaux ou simultanément avec l'initiateur de radicaux.

6. Dispersion hybride polyester-polyuréthane-poly(méth)acrylique selon l'une quelconque des revendications 1 à 5, **caractérisée en ce que** la polymérisation radicalaire des monomères éthyléniquement insaturés dans l'étape (b) est initiée par un initiateur hydrosoluble ou un initiateur insoluble dans l'eau.

7. Dispersion hybride polyester-polyuréthane-poly(méth)acrylique selon l'une quelconque des revendications 1 à 6, **caractérisée en ce que** les monomères (méth)acryliques à l'étape (b) comprennent des monomères de (méth)acrylate d'alkyle.

8. Dispersion hybride polyester-polyuréthane-poly(méth)acrylique selon l'une quelconque des revendications 1 à 7, **caractérisée en ce que** l'hybride polyester-polyuréthane-poly(méth)acrylique possède une température de transition vitreuse, telle que mesurée selon la description, de -50 °C à +50 °C.

9. Dispersion hybride polyester-polyuréthane-poly(méth)acrylique selon l'une quelconque des revendications 1 à 8, **caractérisée en ce que** la teneur en solides de la dispersion hybride polyester-polyuréthane-poly(méth)acrylique est ≥ 40 % en poids.

10. Dispersion hybride polyester-polyuréthane-poly(méth)acrylique selon l'une quelconque des revendications 1 à 9, **caractérisée en ce que** l'hybride polyester-polyuréthane-poly(méth)acrylique comprend 45 à 90 % en poids de polyester-polyuréthane et 10 à 55 % en poids de poly(méth)acrylate, par rapport aux solides d'hybride polyester-polyuréthane-poly(méth)acrylique.

11. Dispersion hybride polyester-polyuréthane-poly(méth)acrylique selon l'une quelconque des revendications 1 à 10, **caractérisée en ce que** le polyester-polyuréthane de l'étape (a) est physiquement mélangé avec le poly(méth)acrylate de l'étape (b) et/ou est lié de manière covalente au poly(méth)acrylate de l'étape (b).

12. Dispersion hybride polyester-polyuréthane-poly(méth)acrylique selon l'une quelconque des revendications 1 à 11, **caractérisée en ce que** l'hybride polyester-polyuréthane-poly(méth)acrylique, préparé à l'aide d'un ou plusieurs monomères monoéthyléniquement insaturés, a un poids moléculaire moyen en nombre (Mₙ) de 2 500 g/mole à 5 000 g/mole et/ou un poids moléculaire moyen en poids (M_{w}) de 25 000 g/mole à 550 000 g/mole.

13. Procédé de production d'une dispersion hybride polyester-polyuréthane-poly(méth)acrylique telle que définie dans la revendication 1
(a) par estérification
d'au moins un polyuréthane contenant des groupes carboxyle, l'au moins un polyuréthane ayant un indice d'acide de plus de 200 mg KOH/g à 400 mg KOH/g et au moins un ou plusieurs groupes carboxyle terminaux ; avec au moins un polyester contenant des groupes hydroxyle, le polyester ayant un indice d'hydroxyle de 50 mg KOH/g à 300 mg KOH/g,
pour obtenir un polyester-polyuréthane ; suivi par
(b) polymérisation de monomères éthyléniquement insaturés au moins comprenant des monomères (méth)acryliques par polymérisation radicalaire en présence du polyester-polyuréthane de l'étape (a), un ou plusieurs solvants étant présent(s) et/ou employés lors de l'étape (a) et/ou (b) et/ou ajoutés après l'étape (b), obtenant ainsi la dispersion hybride polyester-polyuréthane-poly(méth)acrylique.

14. Composition de revêtement comprenant une dispersion hybride polyester-polyuréthane-poly(méth)acrylique telle que définie dans l'une quelconque des revendications 1 à 12.

15. Couche de revêtement formée à partir d'une composition de revêtement selon la revendication 14.

16. Substrat revêtu par une couche de revêtement selon la revendication 15.

17. Utilisation de la composition de revêtement selon la revendication 14 dans un revêtement automobile.

18. Procédé de préparation d'un revêtement multicouche, comprenant les étapes de
a. application d'une ou plusieurs compositions de revêtement de base pour former une ou plusieurs couches de revêtement de base sur un substrat, où au moins une composition de revêtement de base comprend la dispersion hybride polyester-polyuréthane-poly(méth)acrylique telle que définie dans l'une quelconque des revendications 1 à 12,
b. application d'une composition de revêtement transparent sur la ou les couches de revêtement de base pour former une couche de revêtement transparent,
c. durcissement simultané de la ou des couches de revêtement de base et de la couche de revêtement transparent ou durcissement individuel d'une ou plusieurs couches obtenues dans les étapes a. et b. avant que la couche de revêtement subséquente ne soit appliquée ou durcissement individuel de toutes les couches obtenues dans les étapes a. et b.
